# EUROPEAN PATENT APPLICATION

(11) **EP 4 845 235 A1**
(43) Date of publication of application: **25.11.2026**
(21) Application number: 25748970.8
(22) Date of filing: 23.01.2025
(51) Int. Cl.: H04W 48/20, H04W 48/10, H04W 48/14, H04W 8/24, H04W 76/38, H04W 76/27, H04W 24/08, H04W 52/02

(54) **METHOD AND APPARATUS FOR TRANSMITTING/RECEIVING SYSTEM INFORMATION FOR CELL (RE)SELECTION IN WIRELESS COMMUNICATION SYSTEM**

(30) Priority: 31.01.2024 KR 20240015344
(71) Applicant: Samsung Electronics Co., Ltd., Suwon-si, Gyeonggi-do 16677 (KR)
(72) Inventor: JUNG, Sangyeob, Suwon-si Gyeonggi-do 16677 (KR); BAEK, Sangkyu, Suwon-si Gyeonggi-do 16677 (KR); JUNG, Byounghoon, Suwon-si Gyeonggi-do 16677 (KR)
(74) Representative: Gulde & Partner
(86) International application number: PCT/KR2025/001282
(87) International publication number: WO 2025/165066

(57) **Abstract**

The present disclosure relates to a method and an apparatus for efficiently transmitting/receiving system information for cell (re)selection in a wireless communication system. The method by which a terminal receives system information in a wireless communication system, according to an embodiment of the disclosure, comprises steps in which the terminal being in an RRC connection with a first base station of a first cell: transmits, to the first base station, terminal capability information for reception of the system information; and, on the basis of the terminal capability information, receives, from the first base station, an RRC connection release message including configuration information for cell selection or cell reselection of the terminal, wherein the configuration information includes at least a part of the system information about a second cell, which is a candidate target cell for the cell selection or the cell reselection, and/or information for the reception of the system information.

## Description

### (Technical Field)

The disclosure relates to a method and an apparatus for transmitting/receiving system information in a wireless communication system.

### (Background Art)

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### (Detailed Description of the Invention)

### (Technical Problem)

The disclosure provides a method and an apparatus for efficiently transmitting/receiving system information for cell (re)selection in a wireless communication system.

Further, the disclosure provides a method and an apparatus for a UE to efficiently perform cell (re)selection in a wireless communication system.

Further, the disclosure provides a method and an apparatus for a UE to efficiently report information related to cell (re)selection in a wireless communication system.

### (Technical Solution)

According to an embodiment of the disclosure, a method by which a UE receives system information in a wireless communication system may include transmitting, by the UE in a radio resource control (RRC) connected state with a first base station of a first cell, UE capability information for the reception of the system information to the first base station, and receiving, by the UE based on the UE capability information, an RRC connection release message including configuration information for cell selection or cell reselection of the UE from the first base station. The configuration information may include at least one of at least a part of the system information for a second cell which is a candidate target cell for the cell selection or the cell reselection, and information for the reception of the system information.

In an embodiment, the system information includes system information block 1 (SIB1) of the second cell, and the UE capability information may include at least one of capability information capable of transmit a wake-up signal (WUS) for requesting on-demand provision of the SIB1 to a second base station of the second cell that transmits the SIB1, capability information capable of receive SIB1 per cell or per cell list through the RRC connection release message, and capability information capable of receive a part of SIB1 per cell or per cell list through the RRC connection release message.

In an embodiment, the system information includes SIB1 of the second cell, and the configuration information may include at least one of SIB1 per cell, SIB1 per cell list, SIB1 per frequency, and measurement-related parameters for the candidate target cell.

In an embodiment, the method may further include transitioning, by the UE that has received the RRC connection release message, from the RRC connected state to an RRC idle state or an RRC inactive state, and performing a cell selection or cell reselection procedure for the second cell based on the configuration information included in the RRC connection release message.

In an embodiment, the RRC connection release message may further include timer information indicating an applicable period of the configuration information.

Further, according to an embodiment of the disclosure, a UE in a wireless communication system includes a transceiver, and a processor configured to, in an RRC connected state with a first base station of a first cell, transmit UE capability information for the reception of the system information to the first base station through the transceiver, and receive, based on the UE capability information, an RRC connection release message including configuration information for the cell selection or the cell reselection of the UE from the first base station through the transceiver. The configuration information includes at least one of at least a part of the system information for a second cell which is a candidate target cell for the cell selection or the cell reselection, and information for the reception of the system information.

Further, according to an embodiment of the disclosure, a base station in a wireless communication system may include a transceiver, and a processor configured to receive, through the transceiver, UE capability information related to the transmission of system information from a UE in an RRC connected state with the base station of a first cell, and transmit, based on the UE capability information, an RRC connection release message including configuration information for cell selection or cell reselection of the UE to the UE through the transceiver. The configuration information may include at least one of at least a part of the system information for a second cell which is a candidate target cell for the cell selection or the cell reselection, and information for the transmission of the system information.

### (Brief Description of Drawings)

FIG. 1 is a view illustrating a structure of an LTE system according to an embodiment of the disclosure.
FIG. 2 is a view illustrating a radio protocol structure in an LTE system according to an embodiment of the disclosure.
FIG. 3 is a view illustrating a structure of a wireless communication system according to an embodiment of the disclosure.
FIG. 4 is a view illustrating a radio protocol structure of a wireless communication system according to an embodiment of the disclosure.
FIG. 5 is a view illustrating a procedure in which a UE in an RRC idle state (RRC_IDLE) or an RRC inactive state (RRC_INACTIVE) reselects a cell that periodically transmits essential system information in a wireless communication system according to an embodiment of the disclosure.
FIG. 6 is a view illustrating a procedure in which a UE in an RRC idle state (RRC_IDLE) or an RRC inactive state (RRC_INACTIVE) reselects a cell that transmits System Information Block 1 (SIB1) on-demand in a wireless communication system according to an embodiment of the disclosure.
FIG. 7 is a view illustrating a procedure in which a UE in an RRC idle state (RRC_IDLE) or an RRC inactive state (RRC_INACTIVE) reselects a cell that transmits System Information Block 1 (SIB1) on-demand in a wireless communication system according to an embodiment of the disclosure.
FIG. 8 is a view illustrating a procedure in which a UE in an RRC idle state (RRC_IDLE) or an RRC inactive state (RRC_INACTIVE) reselects a cell that transmits System Information Block 1 (SIB1) on-demand in a wireless communication system according to an embodiment of the disclosure.
FIG. 9 is a view illustrating a procedure in which a UE in an RRC idle state (RRC_IDLE) or an RRC inactive state (RRC_INACTIVE) reselects a cell that transmits System Information Block 1 (SIB1) on-demand in a wireless communication system according to an embodiment of the disclosure.
FIG. 10 is a view illustrating a procedure in which a UE performs a random access procedure with a base station to request System Information Block 1 (SIB1) and reports related information to the base station in a wireless communication system according to an embodiment of the disclosure.
FIG. 11 is a view illustrating a procedure in which a UE performs a random access procedure with a base station to request System Information Block 1 (SIB1) and reports related information to the base station in a wireless communication system according to an embodiment of the disclosure.
FIG. 12 is a view illustrating a UE operation in which a UE stores mobility history information and reports the mobility history information to a base station in a wireless communication system according to an embodiment of the disclosure.
FIG. 13 is a block diagram illustrating an internal structure of a UE according to an embodiment of the disclosure.
FIG. 14 is a block diagram illustrating a configuration of an NR base station according to an embodiment of the disclosure.

### (Mode for Carrying out the Invention)

Hereinafter, the operation principle of the disclosure will be described in detail with reference to the accompanying drawings. In the following description, in case that a detailed description of related known functions or configurations may unnecessarily obscure the gist of the disclosure, a detailed description thereof will be omitted. Terms described below are terms defined considering functions in the disclosure and may vary according to the intention or practice of a user or operator. Therefore, the definition should be made based on the content throughout this specification.

In the following description, in case that a detailed description of related known functions or configurations may unnecessarily obscure the gist of the disclosure, a detailed description thereof will be omitted. Hereinafter, embodiments of the disclosure will be described with reference to the accompanying drawings.

The advantages and features of the disclosure and methods for achieving them become apparent with reference to the embodiments described below in detail together with the accompanying drawings. However, the disclosure is not limited to the embodiments disclosed below, but may be implemented in various different forms, and these embodiments are provided only to make the disclosure complete and to fully inform those skilled in the art to which the disclosure pertains of the scope of the disclosure, and the disclosure is only defined by the scope of the claims. Throughout the specification, the same reference numerals refer to the same components.

In this case, it is understood that each block of the processing flowchart diagrams and combinations of flowchart diagrams may be performed by computer program instructions.

Further, each block may represent a module, segment, or portion of code that includes one or more executable instructions for performing specified logical function(s). Further, it should be noted that in some alternative implementations, the functions noted in the blocks may occur out of order. For example, two blocks illustrated in succession may in fact be performed substantially simultaneously, or the blocks may sometimes be performed in reverse order according to the corresponding function.

In this case, the term "unit" used in the present embodiment refers to a software component or a hardware component such as a field programmable gate array (FPGA), or an application specific integrated circuit (ASIC), and a "unit" performs predetermined roles. However, the term "unit" is not limited to software or hardware. A "unit" may be configured to reside in an addressable storage medium or may be configured to reproduce one or more processors. Thus, as an example, a "unit" includes components such as software components, object-oriented software components, class components, and task components, as well as processes, functions, attributes, procedures, subroutines, segments of program code, drivers, firmware, microcode, circuits, data, databases, data structures, tables, arrays, and variables. The functionality provided within components and "units" may be combined into a smaller number of components and "units" or may be further separated into additional components and "units." Further, components and "units" may be implemented to reproduce one or more CPUs within a device or a secure multimedia card. Further, in an embodiment, a "unit" may include one or more processors.

In the disclosure, each of the phrases such as "A and/or B", "A or B", "at least one of A and B", "at least one of A or B", "A, B or C", "at least one of A, B and C" and "at least one of A, B, or C" may include any one of the items listed together in the corresponding phrase, or all possible combinations thereof. Terms such as "first" or "second" may be used merely to distinguish a corresponding component from another corresponding component, and do not limit the corresponding components in another aspect (e.g., importance or order).

Terms for identifying access nodes, terms referring to network entities, terms referring to messages, terms referring to interfaces between network entities, terms referring to various pieces of identification information, or the like, which are used in the following description, are exemplified for convenience of description. Therefore, the disclosure is not limited to the terms described below, and other terms referring to objects having equivalent technical meanings may be used.

For convenience of description below, the disclosure uses terms and names defined in the 5GS and NR specifications defined by the 3rd Generation Partnership Project (3GPP) among currently existing communication standards. However, the disclosure is not limited by the terms and names, and may be equally applied to wireless communication systems conforming to other standards. The disclosure may be applied to 3GPP 5GS/NR (5th generation mobile communication standard).

In the disclosure, a base station is an entity that performs resource allocation for a UE, and may be at least one of an eNode B, a Node B, a base station (BS), a radio access network (RAN), an access network (AN), a RAN node, a radio access unit, a base station controller, or a node on a network. User equipment (UE) may be at least one of a terminal, a mobile station (MS), a cellular phone, a smartphone, a computer, or an electronic device capable of performing communication functions. In the disclosure, downlink (DL) is a radio transmission path of a signal transmitted from a base station to a UE, and uplink (UL) is a radio transmission path of a signal transmitted from a UE to a base station. Further, although embodiments of the disclosure are described below by taking an LTE or LTE-A system as an example, embodiments of the disclosure may be applied to other communication systems having a similar technical background or channel form. Further, embodiments of the disclosure may be applied to other communication systems through some modifications within the scope that does not significantly deviate from the scope of the disclosure at the discretion of those with skilled technical knowledge.

Meanwhile, the 3rd Generation Partnership Project (3GPP), which is in charge of cellular mobile communication standards, has named a new core network structure as 5G Core (5GC) and is undergoing standardization to promote evolution from the existing 4G LTE system to a 5G system. The 5GC supports the following differentiated functions compared to the Evolved Packet Core (EPC), which is a network core for the existing 4G.

In the 5GC, a network slice function is introduced. As a requirement of the 5G system, the 5GC may support various types of UE types and services. (e.g., enhanced Mobile Broadband (eMBB), Ultra Reliable Low Latency Communications (URLLC), massive Machine Type Communications (mMTC)) Such UEs/services have different requirements for the core network. For example, in the case of the eMBB service, a high data rate is required, and in the case of the URLLC service, high reliability and low latency are required. The technology proposed to satisfy such various service requirements is a Network Slice (or referred to as network slicing).

Terms for identifying access nodes, terms referring to network entities, terms referring to messages, terms referring to interfaces between network entities, terms referring to various pieces of identification information, or the like, which are used in the following description, are exemplified for convenience of description. Therefore, the disclosure is not limited to the terms described below, and other terms referring to objects having equivalent technical meanings may be used.

For convenience of description below, the disclosure uses terms and names defined in the 3rd Generation Partnership Project Long Term Evolution (3GPP LTE)/NR specifications. However, the disclosure is not limited by the terms and names, and may be equally applied to systems conforming to other standards. In the disclosure, eNB may be used interchangeably with gNB for convenience of description. That is, a base station described as eNB may represent gNB.

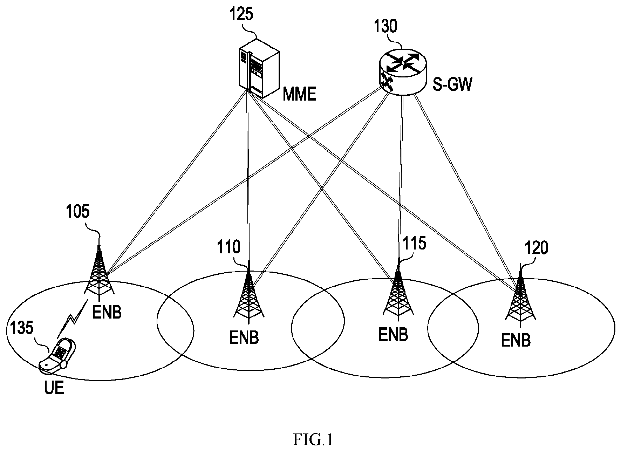

FIG. 1 is a view illustrating a structure of an LTE system according to an embodiment of the disclosure.

Referring to FIG. 1, as illustrated, an LTE system may include base stations (e.g., Evolved Node B, hereinafter ENB or Node B) 105, 110, 115, 120, a Mobility Management Entity (MME) 125, and a Serving-Gateway (S-GW) 130. A user equipment (hereinafter UE or terminal) 135 accesses an external network via the ENBs 105-120 and the S-GW 130.

In FIG. 1, the ENBs 105-120 correspond to the existing Node B of the Universal Mobile Telecommunication System (UMTS) system. The ENB is connected to the UE 135 through a radio channel and performs a more complex role than the existing Node B. In the LTE system, since all user traffic including real-time services such as Voice over IP (VoIP) through the Internet protocol is serviced through a shared channel, a device that collects status information such as the buffer status, available transmission power status, and channel status of UEs and performs scheduling is required, and the ENBs 105-120 are in charge of this. One ENB typically controls a plurality of cells. For example, to implement a transmission rate of 100 Mbps, the LTE system uses, e.g., Orthogonal Frequency Division Multiplexing (hereinafter referred to as OFDM) as a radio access technology in a 20 MHz bandwidth. Further, an Adaptive Modulation & Coding (hereinafter referred to as AMC) scheme that determines a modulation scheme and a channel coding rate according to the channel state of the UE is applied. The S-GW 130 is a device that provides a data bearer, and generates or removes a data bearer under the control of the MME 125. The MME is a device that is in charge of various control functions as well as mobility management functions for the UE, and is connected to a plurality of base stations.

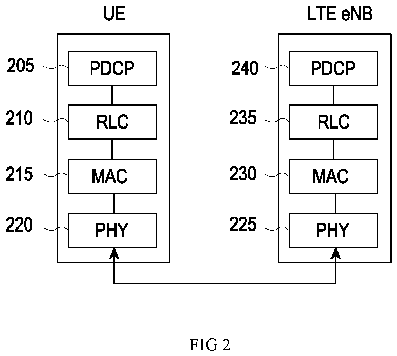

FIG. 2 is a view illustrating a radio protocol structure in an LTE system according to an embodiment of the disclosure.

Referring to FIG. 2, the radio protocol stack of the LTE system includes Packet Data Convergence Protocol (PDCP) 205, 240, Radio Link Control (RLC) 210, 235, and Medium Access Control (MAC) 215, 230 in the UE and the ENB, respectively. The Packet Data Convergence Protocol (PDCP) 205, 240 is in charge of operations such as IP header compression/decompression. The main functions of the PDCP are summarized as follows.
- Header compression and decompression: robust header compression (ROHC) only
- Transfer of user data
- In-sequence delivery of upper layer packet data units (PDUs) at PDCP re-establishment procedure for RLC AM
- For split bearers in dual connectivity (DC) (only support for RLC AM): PDCP PDU routing for transmission and PDCP PDU reordering for reception
- Duplicate detection of lower layer service data units (SDUs) at PDCP re-establishment procedure for RLC acknowledge mode (AM)
- Retransmission of PDCP SDUs at handover and, for split bearers in DC, of PDCP PDUs at PDCP data-recovery procedure, for RLC AM
- Ciphering and deciphering
- Timer-based SDU discard in uplink.

Radio Link Control (hereinafter referred to as RLC) 210, 235 reconstructs PDCP PDUs into an appropriate size and performs ARQ operations, etc. The main functions of the RLC are summarized as follows.
- Transfer of upper layer PDUs
- Error Correction through ARQ (only for AM data transfer)
- Concatenation, segmentation and reassembly of RLC SDUs (only for unacknowledge mode (UM) and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 215, 230 is connected to several RLC layer devices configured in one UE, and performs operations of multiplexing RLC PDUs into a MAC PDU and demultiplexing RLC PDUs from a MAC PDU. The main functions of the MAC are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through hybrid automatic repeat request (HARQ)
- Priority handling between logical channels of one UE
- Priority handling between UEs by means of dynamic scheduling
- multimedia broadcast multicast service (MBMS) service identification
- Transport format selection
- Padding

The physical layer 220, 225 performs an operation of channel-coding and modulating upper layer data, generating OFDM symbols, and transmitting the OFDM symbols to a radio channel, or demodulating and channel-decoding OFDM symbols received through a radio channel and delivering them to an upper layer.

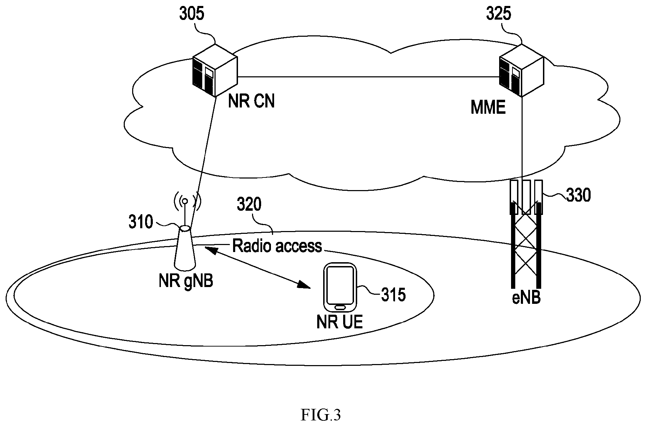

FIG. 3 is a view illustrating a structure of a wireless communication system according to an embodiment of the disclosure.

Referring to FIG. 3, as illustrated, a wireless communication system (or NR system) includes a base station (New Radio Node B, hereinafter NR gNB or NR base station) 310 and an NR Core Network (NR CN) 305. A user equipment (New Radio User Equipment, hereinafter NR UE or UE) 315 accesses an external network via the NR gNB 310 and the NR CN 305.

In FIG. 3, the NR gNB 310 corresponds to an eNB (Evolved Node B) of the existing LTE system. The NR gNB is connected to the NR UE 315 through a radio channel and may provide a much better communication service than the eNB 330. In the wireless communication system, since all user traffic is serviced through a shared channel, a device that collects status information such as the buffer status, available transmission power status, and channel status of UEs and performs scheduling is required, and the NR gNB 310 is in charge of this. One NR gNB typically controls a plurality of cells. The NR gNB 310 may have a bandwidth greater than the current maximum bandwidth to implement ultra-high-speed data transmission compared to the current LTE, uses Orthogonal Frequency Division Multiplexing (hereinafter referred to as OFDM) as a radio access technology, and beamforming technology may be additionally used. Further, an Adaptive Modulation & Coding (hereinafter referred to as AMC) scheme that determines a modulation scheme and a channel coding rate according to the channel state of the UE 315 may be applied. The NR CN 305 performs functions such as mobility support, bearer setup, and Quality of Service (QoS) setup. The NR CN 305 is a device that is in charge of various control functions as well as mobility management functions for the UE 315, and is connected to a plurality of base stations. Further, the wireless communication system may also be interworked with the existing LTE system, and the NR CN 305 is connected to the MME 325 through a network interface. The MME 325 is connected to the eNB 330, which is an existing base station.

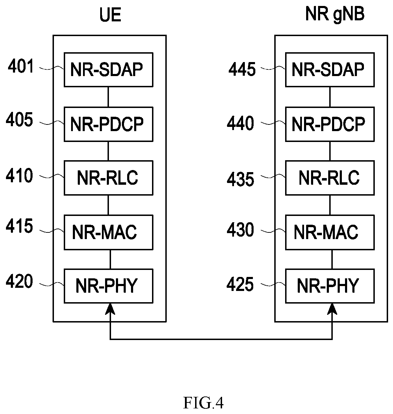

FIG. 4 is a view illustrating a radio protocol structure of a wireless communication system according to an embodiment of the disclosure, and FIG. 4 is a view illustrating an example of the radio protocol structure of a wireless communication system to which the disclosure may be applied.

Referring to FIG. 4, the radio protocol stack of the wireless communication system includes NR service data adaptation protocol (SDAP) 401, 445, NR PDCP 405, 440, NR RLC 410, 435, and NR MAC 415, 430 in the UE and the NR base station, respectively.

The main functions of the NR SDAP 401, 445 may include at least some of the following functions.
- transfer of user plane data
- mapping between a QoS flow and a data radio bearer (DRB) for both downlink (DL) and uplink (UL)
- marking QoS flow ID in both DL and UL packets
- reflective QoS flow to DRB mapping for the UL SDAP PDUs.

For the SDAP layer device, the UE may be configured with a radio resource control (RRC) message as to whether to use the header of the SDAP layer device or whether to use the function of the SDAP layer device for each PDCP layer device or each bearer or each logical channel, and when the SDAP header is configured, the UE may be instructed to update or reconfigure mapping information for the QoS flow and the data bearer in the uplink and the downlink through a non-access stratum (NAS) QoS reflection configuration 1-bit indicator (NAS reflective QoS) and an access stratum (AS) QoS reflection configuration 1-bit indicator (AS reflective QoS) of the SDAP header. The SDAP header may include QoS flow ID information indicating QoS. The QoS information may be used as data processing priority, scheduling information, etc. for supporting a smooth service.

The main functions of the NR PDCP 405, 440 may include at least some of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink.

In the above, the reordering function of the NR PDCP device refers to a function of reordering PDCP PDUs received from a lower layer in order based on PDCP sequence number (SN), and may include a function of delivering data to an upper layer in the reordered order, or may include a function of directly delivering without considering the order, may include a function of recording lost PDCP PDUs by reordering, may include a function of reporting the status of lost PDCP PDUs to the transmitting side, and may include a function of requesting retransmission of lost PDCP PDUs.

The main functions of the NR RLC 410, 435 may include at least some of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above, the in-sequence delivery function of the NR RLC device refers to a function of delivering RLC SDUs received from a lower layer to an upper layer in order, and may include a function of reassembling and delivering when one original RLC SDU is divided into a plurality of RLC SDUs and received, may include a function of reordering the received RLC PDUs based on RLC sequence number (SN) or PDCP sequence number (SN), may include a function of recording lost RLC PDUs by reordering the order, may include a function of reporting the status of lost RLC PDUs to the transmitting side, may include a function of requesting retransmission of lost RLC PDUs, may include a function of delivering only the RLC SDUs before the lost RLC SDU to the upper layer in order if there is a lost RLC SDU, or may include a function of delivering all RLC SDUs received before the timer started to the upper layer in order if a predetermined timer has expired even if there is a lost RLC SDU, or may include a function of delivering all RLC SDUs received so far to the upper layer in order if a predetermined timer has expired even if there is a lost RLC SDU. Further, in the above, the RLC PDUs may be processed in the order in which they are received (regardless of the order of sequence numbers, in the order of arrival) and delivered to the PDCP device regardless of order (Out-of sequence delivery), and in the case of a segment, segments stored in a buffer or to be received later may be received and reconstructed into a single complete RLC PDU, and then processed and delivered to the PDCP device. The NR RLC layer may not include a concatenation function, and the function may be performed in the NR MAC layer or replaced by a multiplexing function of the NR MAC layer.

In the above, the out-of-sequence delivery function of the NR RLC device refers to a function of directly delivering RLC SDUs received from a lower layer to an upper layer regardless of order, and may include a function of reassembling and delivering when one original RLC SDU is divided into a plurality of RLC SDUs and received, and may include a function of storing the RLC SN or PDCP SN of the received RLC PDUs and arranging the order to record lost RLC PDUs.

The NR MAC 415, 430 may be connected to several NR RLC layer devices configured in one UE, and the main functions of the NR MAC may include at least some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layer 420, 425 may perform an operation of channel-coding and modulating upper layer data, generating OFDM symbols, and transmitting the OFDM symbols to a radio channel, or demodulating and channel-decoding OFDM symbols received through a radio channel and delivering them to an upper layer.

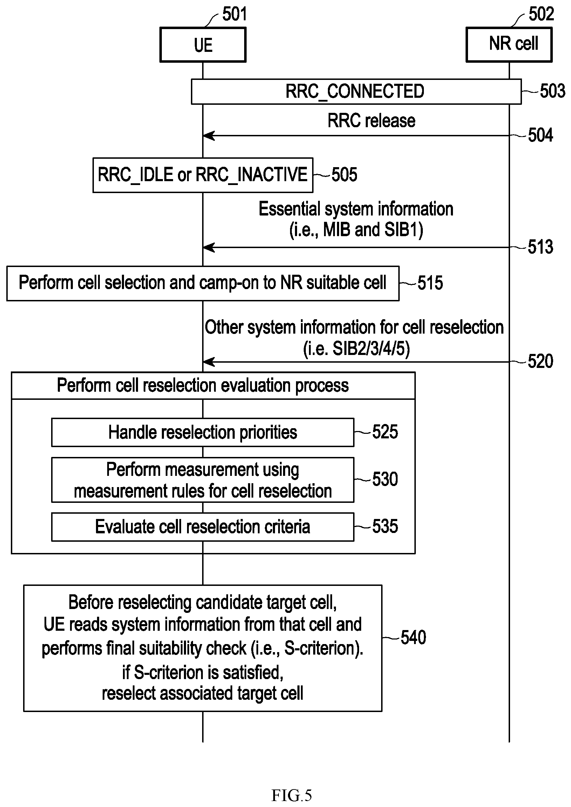

FIG. 5 is a view illustrating a procedure in which a UE in an RRC idle state (RRC_IDLE) or an RRC inactive state (RRC_INACTIVE) reselects a cell that periodically transmits (essential) system information in a wireless communication system according to an embodiment of the disclosure.

A base station of a cell according to the disclosure may periodically transmit essential system information indicating at least one of Master Information Block (MIB) and System Information Block 1 (SIB1). The essential system information includes configuration information necessary for a UE to select or camp-on to a cell. Hereinafter, the essential system information may be simply referred to as system information.

The cell reselection evaluation procedure may refer to a procedure in which a UE in an RRC idle state (RRC_IDLE) or an RRC inactive state (RRC_INACTIVE) determines whether to maintain the current serving cell or reselect a cell to a neighbor cell when the service quality of the serving cell to which the UE is currently camping-on becomes lower than the service quality of a neighbor cell due to a predetermined reason or movement.

In the case of handover, whether to perform the handover operation is determined by the network (Access and Mobility management Function (AMF) or source gNB), whereas in the case of cell reselection, a UE in an RRC idle state or an RRC inactive state may determine whether to perform the cell reselection operation by itself based on the cell measurement value. The cell that the UE reselects may refer to a cell using the same NR frequency (NR intra-frequency or serving NR frequency) as the serving cell to which the UE is currently camping-on, a cell using an NR frequency different from the serving cell (NR inter-frequency), or a cell at a frequency (inter-RAT frequency) using another Radio Access Technology (hereinafter RAT). Hereinafter, in the embodiments of the disclosure, the UE transmitting/receiving data to/from an NR cell may mean that the UE transmits/receives data to/from a base station of the NR cell.

Referring to FIG. 5, a UE 501 may establish an RRC connection with an NR cell 502 and be in an RRC connected state (RRC_CONNECTED) 503. Hereinafter, in the embodiments of the disclosure, the RRC connected state, the RRC idle state, and the RRC inactive state may be referred to as an RRC connected mode, an RRC idle mode, and an RRC inactive mode, respectively.

The NR cell 502 may transmit 504 an RRC connection release message (RRCRelease) to release the RRC connection with the UE 501 in the RRC connected state. If, for example, suspend configuration information (suspendConfig) is included in the RRC connection release message, the UE may transition 505 to the RRC inactive state (RRC_INACTIVE). If the suspend configuration information is not included in the RRC connection release message, the UE may transition 505 to the RRC idle state (RRC_IDLE). The RRC connection release message may include information (e.g., cellReselectionPriorities) indicating a priority for the UE to perform cell reselection. The cellReselectionPriorities may include at least one value of freqPriorityListEUTRA, freqPriorityListNR, and t320 defined in the 3GPP specification. The UE, when the timer value of t320 is included, may operate the T320 timer defined in the 3GPP specification with the value. Specifically, the configuration information included in the RRCRelease message may be as shown in the following [Table 1].

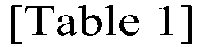

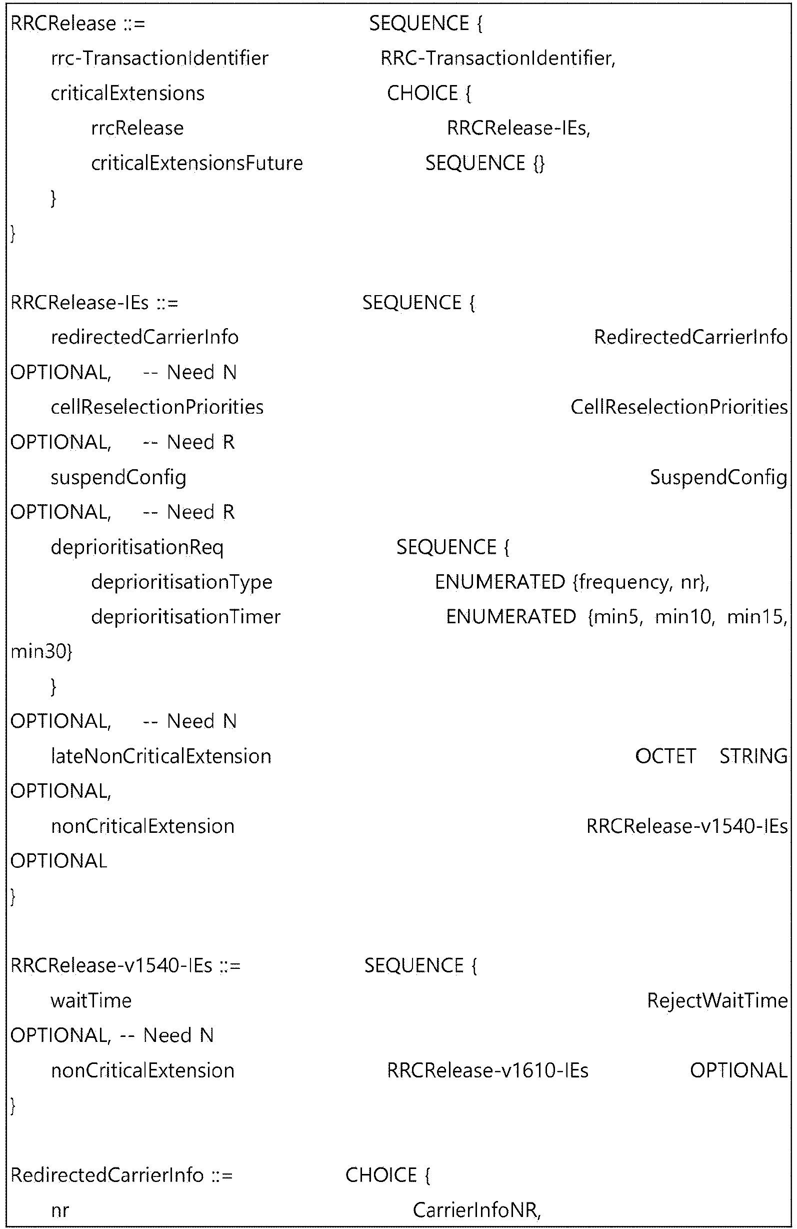

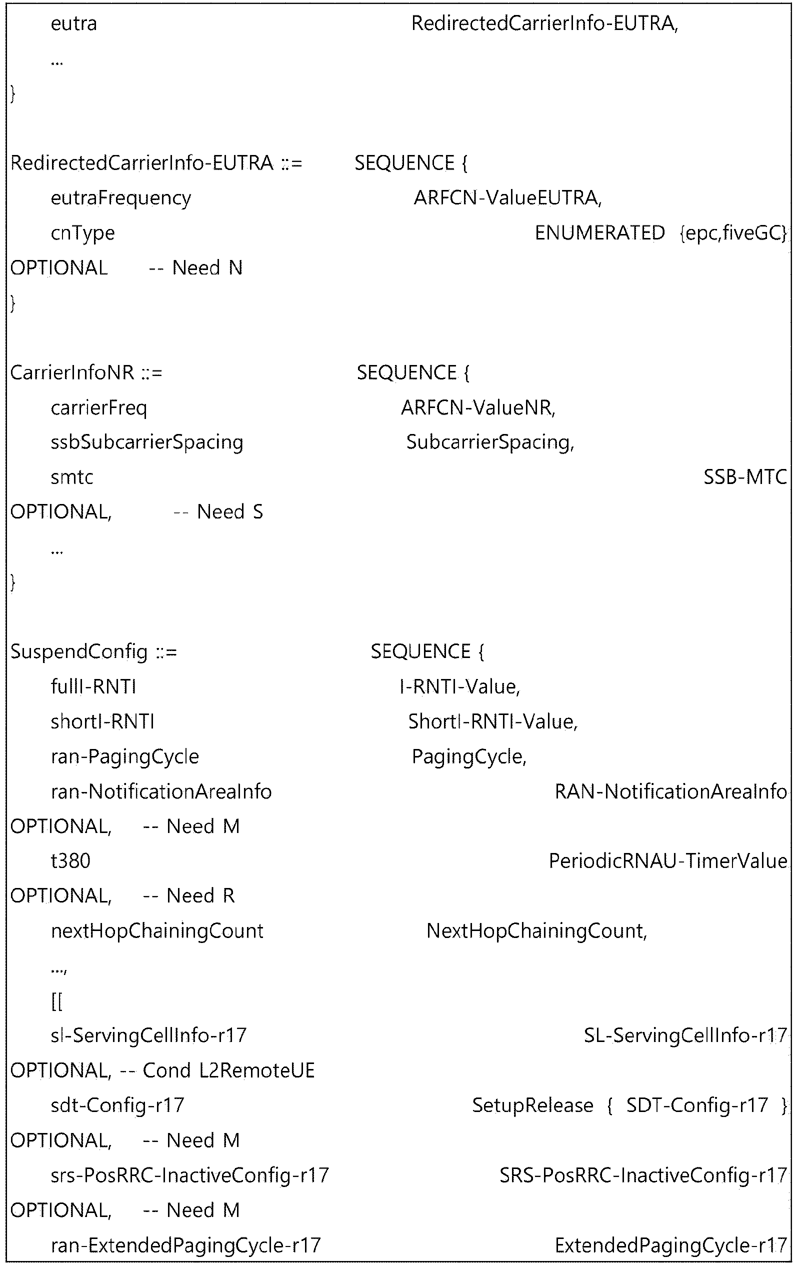

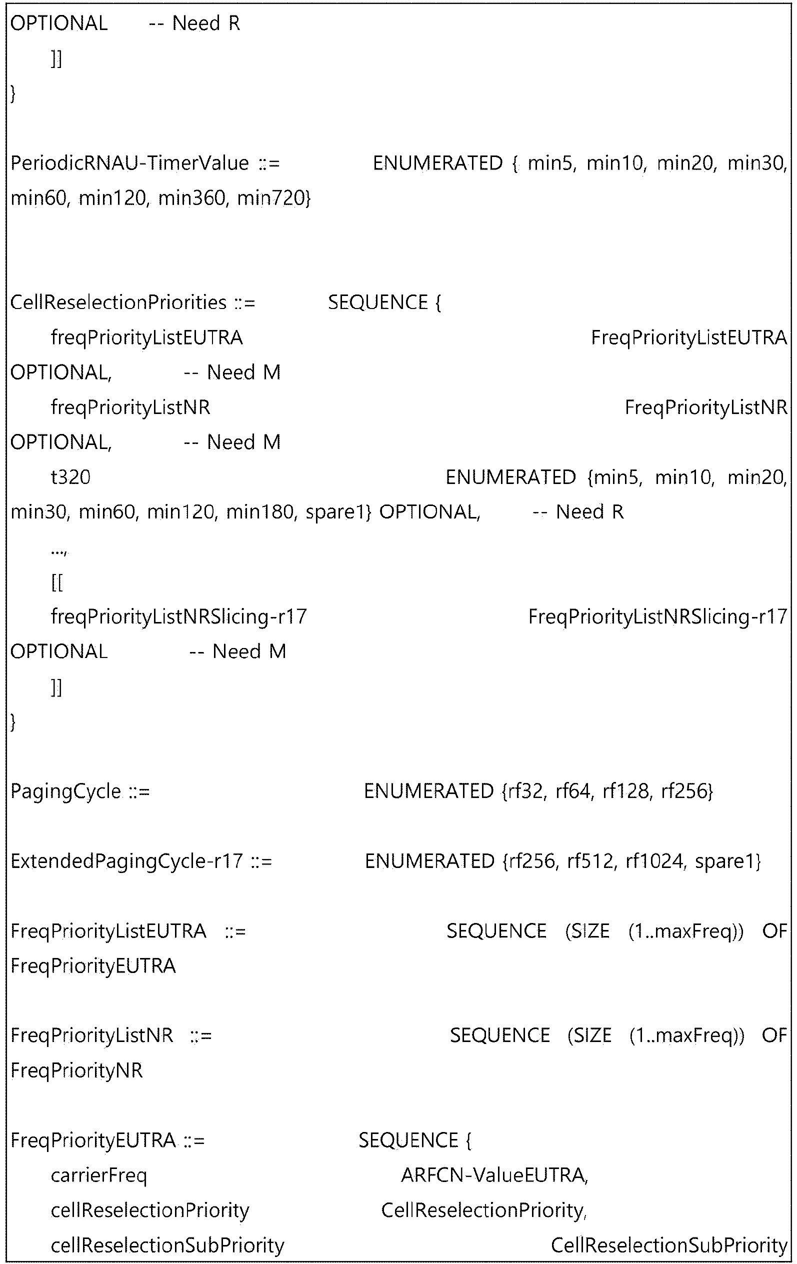

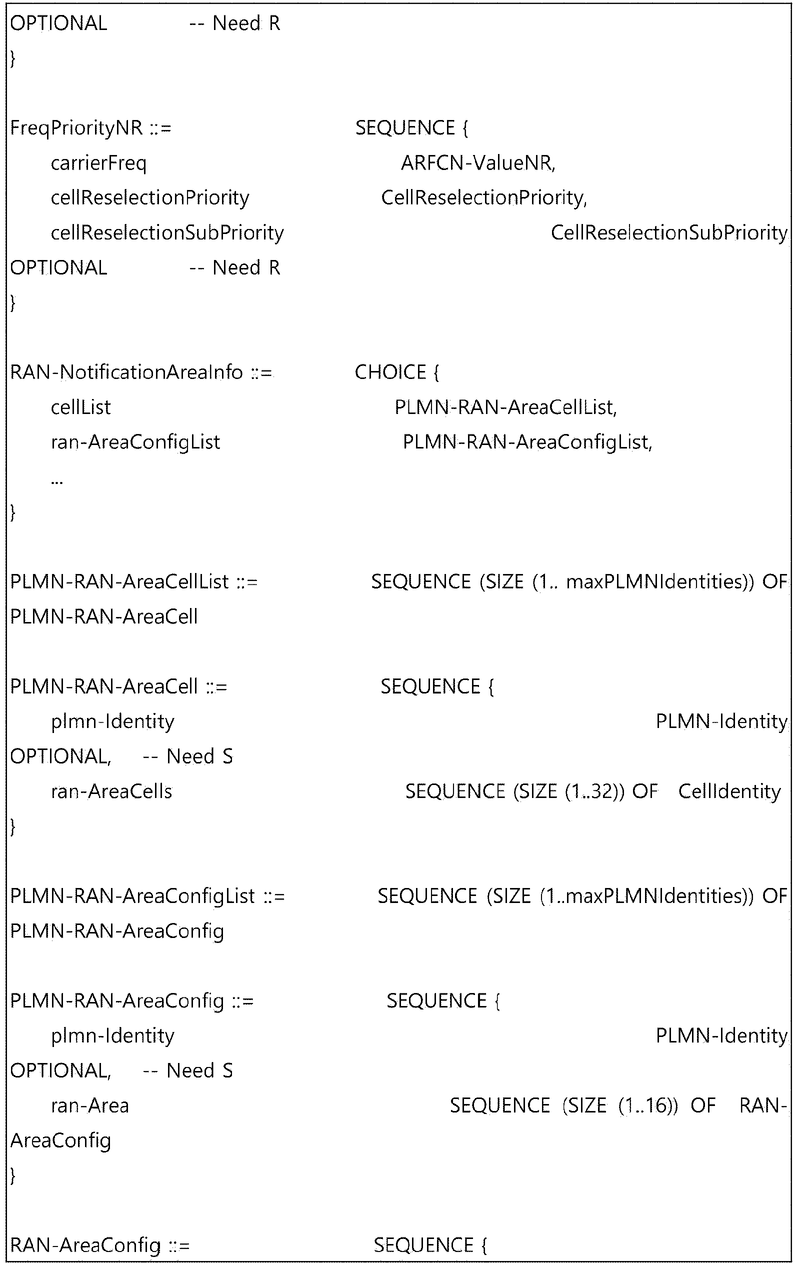

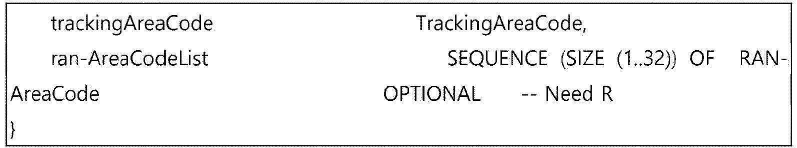

In step 513, the UE 501 in the RRC idle state or the RRC inactive state may acquire essential system information from the NR cell 502. In the disclosure, at least one of Master Information Block (MIB) and System Information Block 1 (SIB1) may be referred to as essential system information.

In step 515, the UE 501 in the RRC idle state or the RRC inactive state may perform a cell selection procedure based on the essential system information acquired in step 513. That is, the UE may find an NR suitable cell belonging to the selected Public Land Mobile Network (PLMN) or Standalone Non-Public Network (SNPN) and camp-on to the cell. The cell to which the UE 501 has camped-on may be referred to as a serving cell. In the disclosure, based on the 3GPP standard document "TS 38.304: User Equipment (UE) procedures in Idle mode and RRC Inactive state", it may be defined as a suitable cell when the conditions in the following [Table 2] are satisfied.

**[Table 2]**

| |
|---|
| **suitable cell:** |
| For UE not operating in SNPN Access Mode, a cell is considered as suitable if the following conditions are fulfilled: |
| -The cell is part of either the selected PLMN or the registered PLMN or PLMN of the Equivalent PLMN list, and for that PLMN either: |
| -The PLMN-ID of that PLMN is broadcast by the cell with no associated CAG-IDs and CAG-only indication in the UE for that PLMN (TS 23.501 [10]) is absent or false; |
| -Allowed CAG list in the UE for that PLMN (TS 23.501 [10]) includes a CAG-ID broadcast by the cell for that PLMN; |
| -The cell selection criteria are fulfilled, see clause 5.2.3.2. |
| According to the latest information provided by NAS: |
| -The cell is not barred, see clause 5.3.1; |
| -The cell is part of at least one TA that is not part of the list of "Forbidden Tracking Areas for Roaming" (TS 22.011 [18]), which belongs to a PLMN that fulfils the first bullet above. |
| For UE operating in SNPN Access Mode, a cell is considered as suitable if the following conditions are fulfilled: |
| -The cell is part of either the selected SNPN or the registered SNPN of the UE; |
| -The cell selection criteria are fulfilled, see clause 5.2.3.2; |
| According to the latest information provided by NAS: |
| -The cell is not barred, see clause 5.3.1; |
| -The cell is part of at least one TA that is not part of the list of "Forbidden Tracking Areas for Roaming" which belongs to either the selected SNPN or the registered SNPN of the UE. |

For reference, the UE may determine that the cell selection criteria are fulfilled when the following [Equation 1] is satisfied.

[Equation 1] $Srxlev > 0 AND Squal > 0$ where$Srxlev = {Q}_{rxlevmeas} - \left({Q}_{rxlevmin}+{Q}_{rxlevminoffset}\right) - {P}_{compensation} - {Qoffset}_{temp} ,$$Squal = {Q}_{qualmeas} - \left({Q}_{qualmin}+{Q}_{qualminoffset}\right) - {Qoffset}_{temp}$

The variables in [Equation 1] may be defined as shown in [Table 3] below.

**[Table 3]**

| | |
|---|---|
| Srxlev | Cell selection RX level value (dB) |
| Squal | Cell selection quality value (dB) |
| Qoffsetₜₑₘₚ | Offset temporarily applied to a cell as specified in TS 38.331 [3] (dB) |
| Qᵣₓₗₑᵥₘₑₐₛ | Measured cell RX level value (RSRP) |
| Q_{qualmeas} | Measured cell quality value (RSRQ) |
| Qᵣₓₗₑᵥₘᵢₙ | Minimum required RX level in the cell (dBm). If the UE supports SUL frequency for this cell, Qᵣₓₗₑᵥₘᵢₙ is obtained from *g-RxLevMinSUL,* if present, in *SIB1, SIB2* and *SIB4,* additionally, if Q_{rxlevminoffsetcellSUL} is present in *SIB3* and *SIB4* for the concerned cell, this cell specific offset is added to the corresponding Qrxlevmin to achieve the required minimum RX level in the concerned cell; |
| | else Qᵣₓₗₑᵥₘᵢₙ is obtained from *q-RxLevMin* in *SIB1, SIB2* and *SIB4,* additionally, if Q_{rxlevminoffsetcell} is present in *SIB3* and *SIB4* for the concerned cell, this cell specific offset is added to the corresponding Qrxlevmin to achieve the required minimum RX level in the concerned cell. |
| Q_{qualmin} | Minimum required quality level in the cell (dB). |
| | Additionally, if Q_{qualminoffsetcell} is signalled for the concerned cell, this cell specific offset is added to achieve the required minimum quality level in the concerned cell. |
| Q_{rxlevminoffset} | Offset to the signalled Qᵣₓₗₑᵥₘᵢₙ taken into account in the Srxlev evaluation as a result of a periodic search for a higher priority PLMN while camped normally in a VPLMN, as specified in TS 23.122 [9]. |
| Q_{qualminoffset} | Offset to the signalled Q_{qualmin} taken into account in the Squal evaluation as a result of a periodic search for a higher priority PLMN while camped normally in a VPLMN, as specified in TS 23.122 [9]. |
| P_{compensation} | For FR1, if the UE supports the *additionalPmax* in the *NR-NS-PmaxList,* if present, in *SIB1, SIB2* and *SIB4: max(P_{EMAX1} -P_{PowerClass}, 0) - (min(P_{EMAX2}, P_{PowerClass})* -*min(P_{EMAX1}, P_{PowerClass})) (dB);* |
| | *else:* |
| | *max(P_{EMAX1} -P_{PowerClass}, 0) (dB)* |
| | For FR2, P_{compensation} is set to 0. |
| | For IAB-MT, P_{compensation} is set to 0. |
| P_{EMAX1}, P_{EMAX2} | Maximum TX power level of a UE may use when transmitting on the uplink in the cell (dBm) defined as P_{EMAX} in TS 38.101 [15]. If UE supports SUL frequency for this cell, P_{EMAX1} and P_{EMAX2} are obtained from the p-*Max* for SUL in *SIB1* and *NR-NS-PmaxList* for SUL respectively in *SIB1, SIB2* and *SIB4* as specified in TS 38.331 [3], else P_{EMAX1} and P_{EMAX2} are obtained from the *p-Max* and *NR-NS-PmaxList* respectively in *SIB1, SIB2* and *SIB4* for normal UL as specified in TS 38.331 [3]. |
| P_{PowerClass} | Maximum RF output power of the UE (dBm) according to the UE power class as defined in TS 38.101-1 [15]. |

In step 520, the UE 501 in the RRC idle state or the RRC inactive state may acquire system information (e.g., SIB2, SIB3, SIB4, SIB5) including cell reselection information from the serving cell 502 to perform the cell reselection evaluation procedure. SIB2 may include at least one of information/parameters commonly applied to the UE 501 in the RRC idle state or the RRC inactive state for reselecting NR intra-frequency, NR inter-frequency, and inter-RAT frequency cells, and NR intra-frequency cell reselection information excluding information related to NR intra-frequency neighbor cells. For example, SIB2 may include one cell reselection priority configuration information for the serving NR frequency (the frequency to which the currently camped-on cell belongs). The cell reselection priority configuration information may indicate the priority value for cell reselection using, e.g., cellReselectionPriority and cellReselectionSubPriority. Specifically, cellReselectionPriority may accommodate an integer value (e.g., one integer value from 0 to 7), and cellReselectionSubPriority may accommodate a fractional value (e.g., one fractional value of 0.2, 0.4, 0.6, 0.8). If both cellReselectionPriority and cellReselectionSubPriority are signaled, the UE 501 may add the two values to derive the cell reselection priority value. For reference, a larger cell reselection priority value means a higher priority. For example, the cell reselection configuration information broadcast in SIB2 may include information as shown in the following [Table 4].

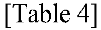

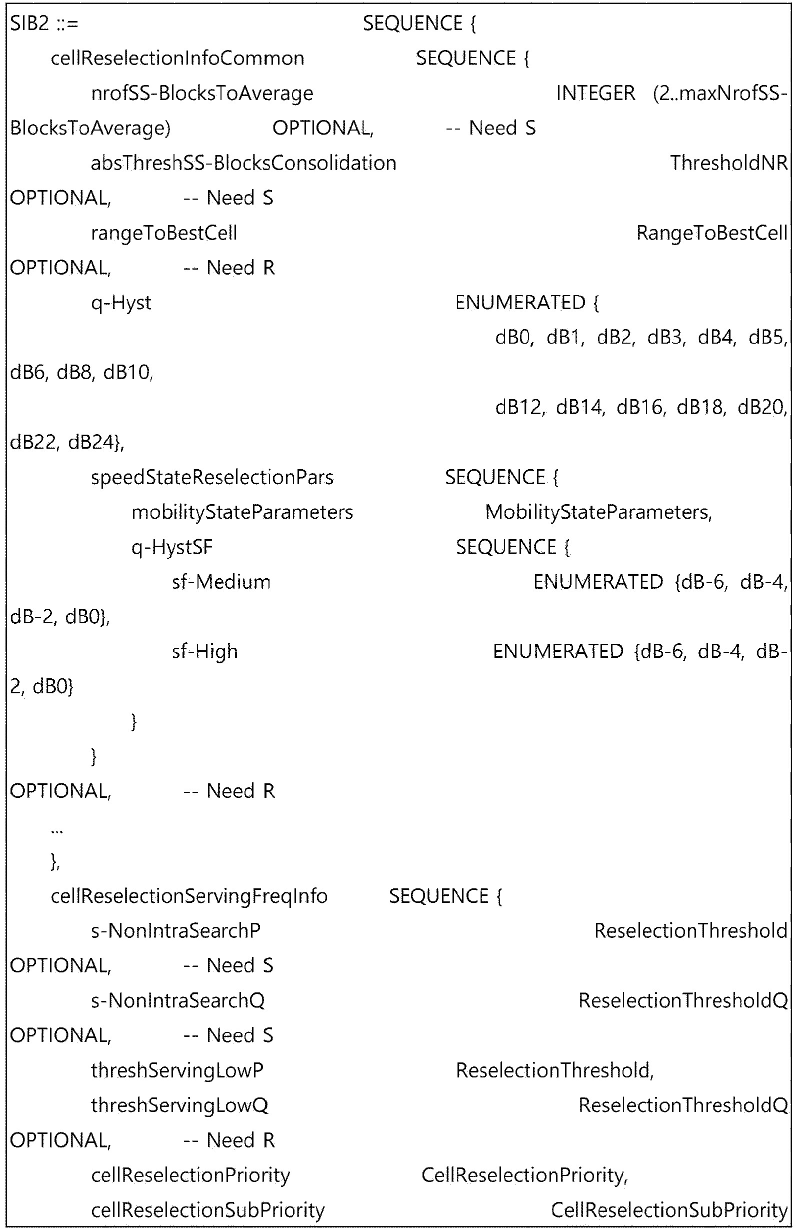

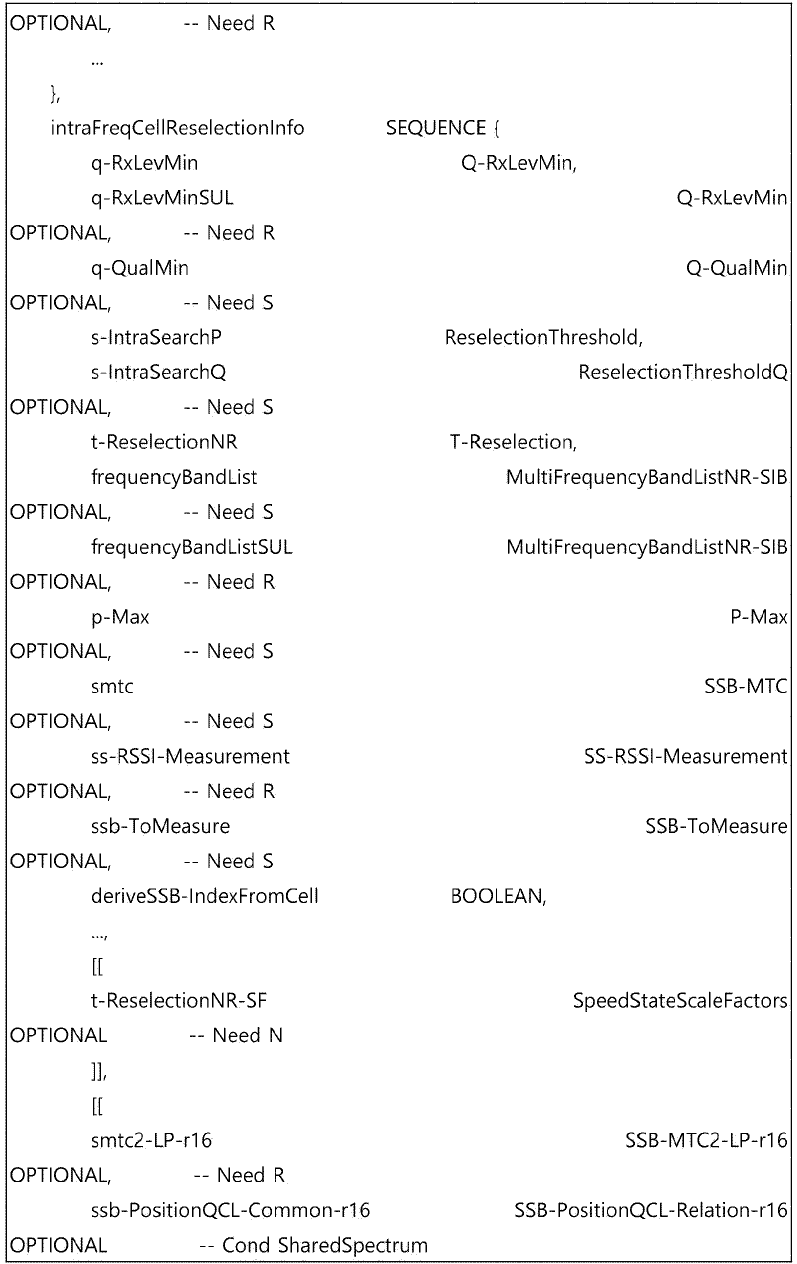

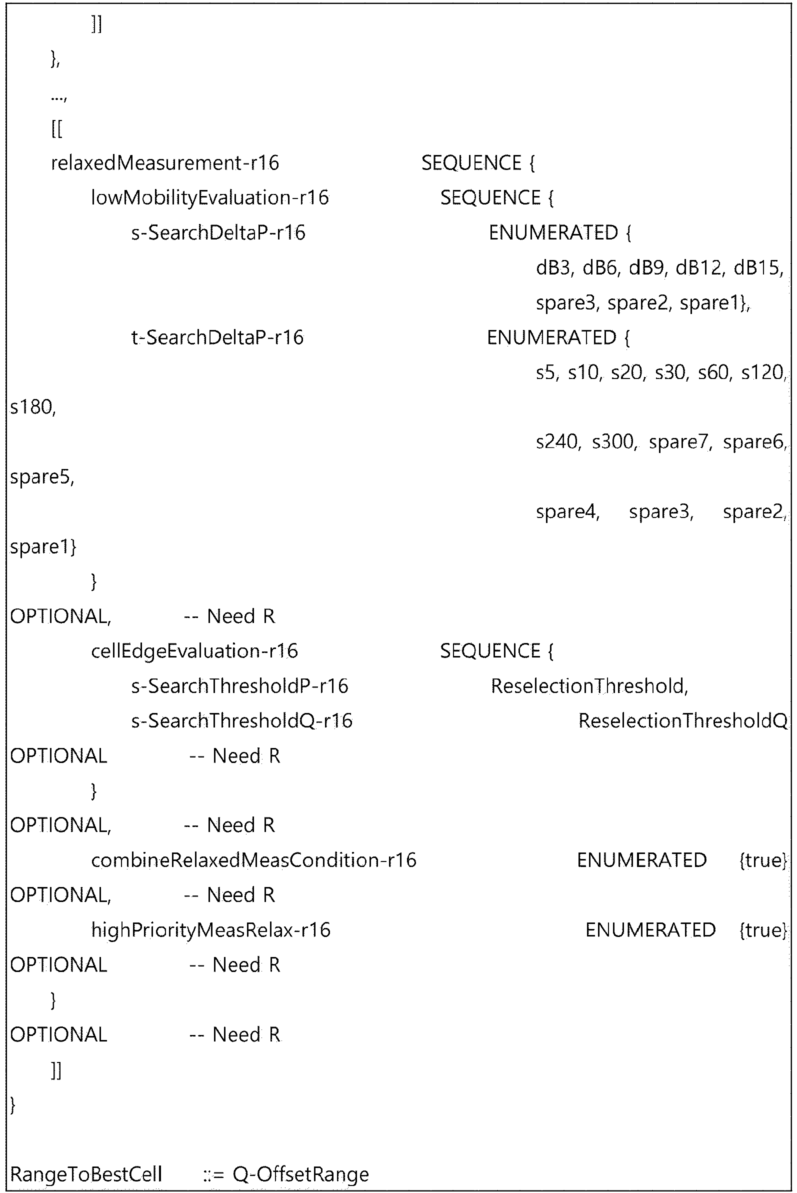

SIB3 may include neighbor cell information/parameters for a UE in the RRC idle state or the RRC inactive state to reselect an NR intra-frequency cell. For example, SIB3 may be broadcast including at least one of an NR intra-frequency cell list (intraFreqNeighCellList) for reselecting an NR intra-frequency cell, a cell list in which NR intra-frequency cell reselection is allowed (intraFreqAllowedCellList), and a cell list in which NR intra-frequency cell reselection is not allowed (intraFreqExcludedCellList). For example, SIB3 may include the information in the following [Table 5].

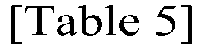

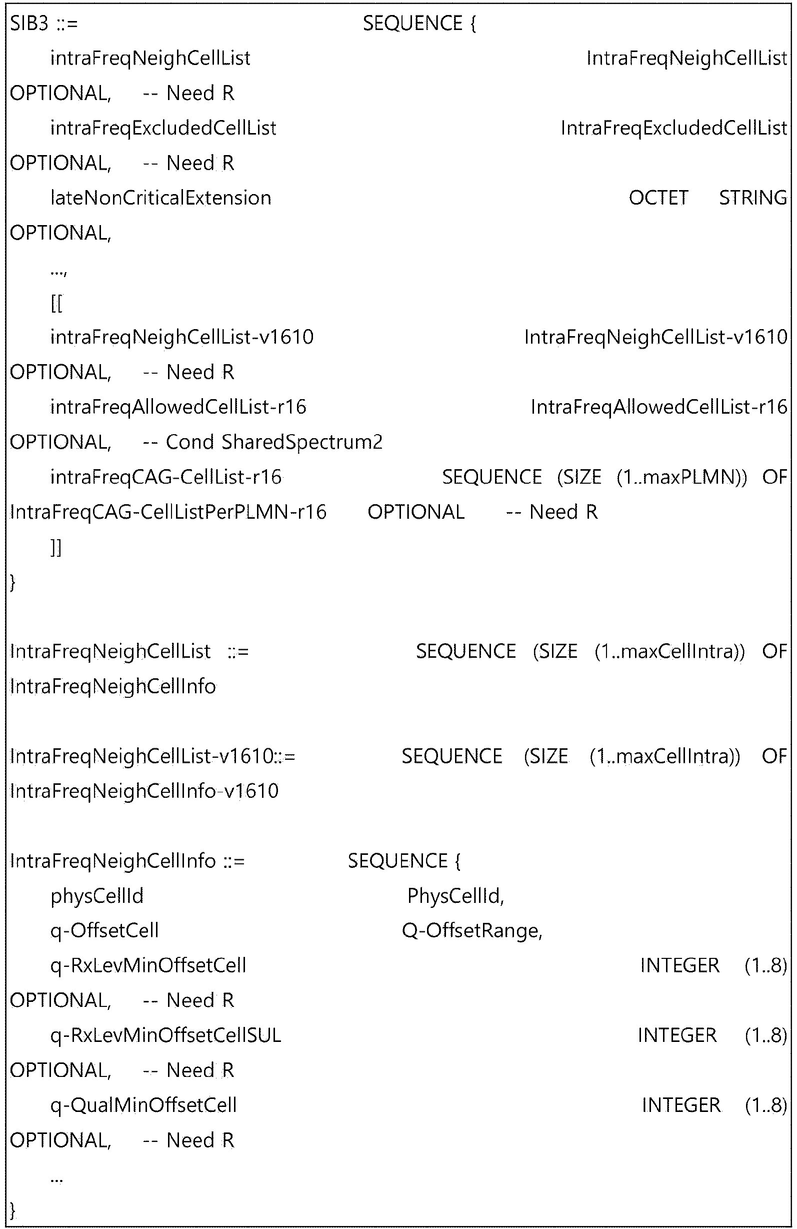

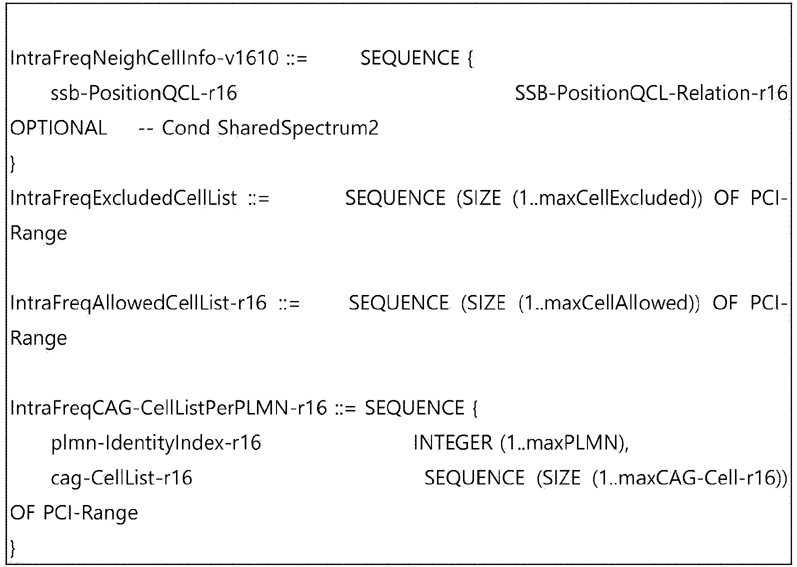

SIB4 may include information/parameters for a UE in the RRC idle state or the RRC inactive state to reselect an NR inter-frequency cell. For example, SIB4 may be broadcast including one of a plurality of NR inter-frequencies, and one cell reselection priority configuration information for each NR inter-frequency may be broadcast. The cell reselection priority configuration information for each NR inter-frequency means the above description (e.g., cellReselectionPriority and/or cellReselectionSubPriority mapped to each NR inter-frequency), but has a characteristic that one cell reselection priority configuration information for each inter-frequency is optionally broadcast. For example, SIB4 may include the information in the following [Table 6].

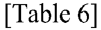

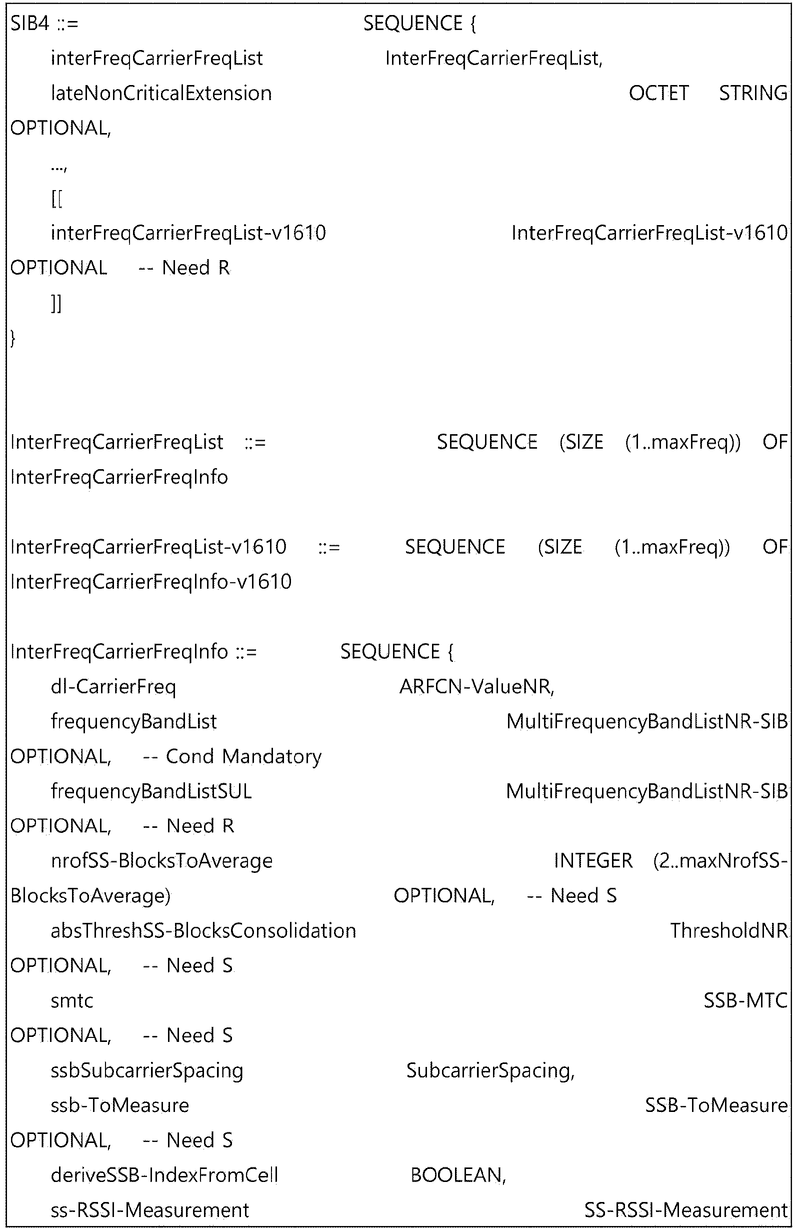

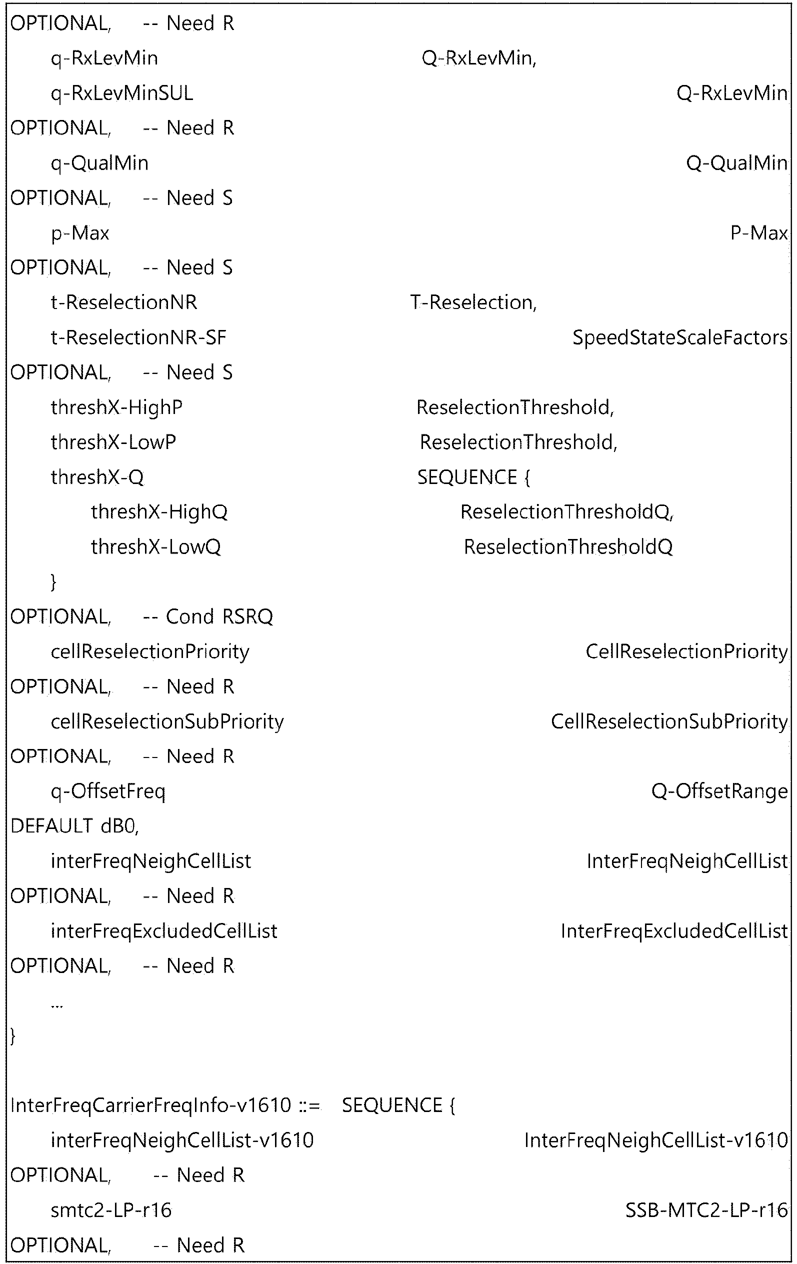

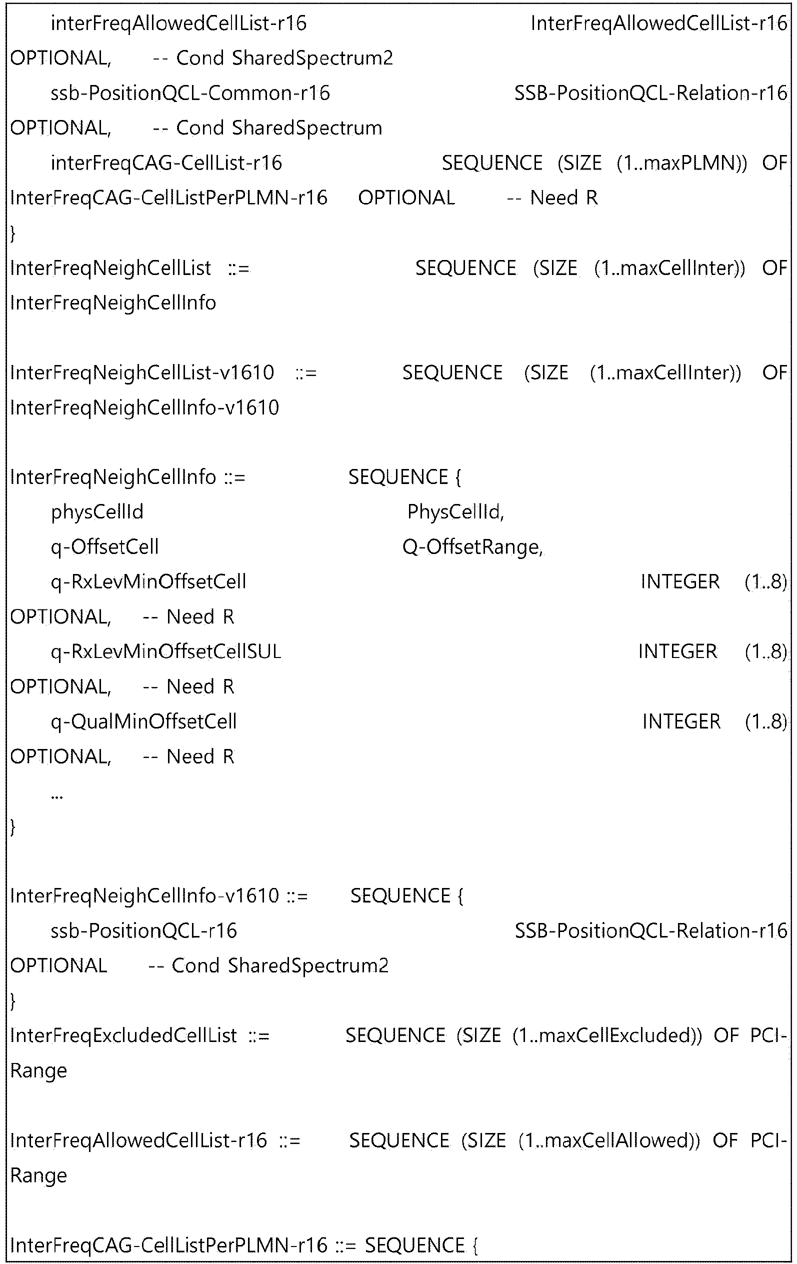

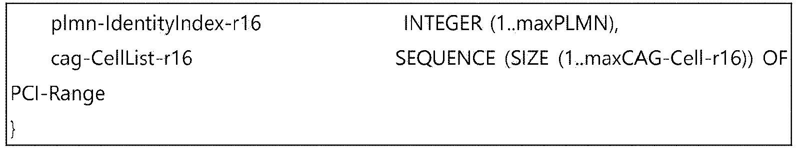

SIB5 may include information/parameters for a UE in the RRC idle state or the RRC inactive state to reselect an inter-RAT frequency cell. For example, SIB5 may be broadcast including one or a plurality of EUTRA frequencies, and may be broadcast including one cell reselection priority configuration information for each EUTRA frequency. The cell reselection priority configuration information for each EUTRA frequency means the above description (e.g., cellReselectionPriority and/or cellReselectionSubPriority mapped to each EUTRA frequency), but one cell reselection priority configuration information for each EUTRA frequency may be optionally included and broadcast. For example, SIB5 may include the information in the following [Table 7].

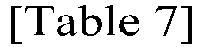

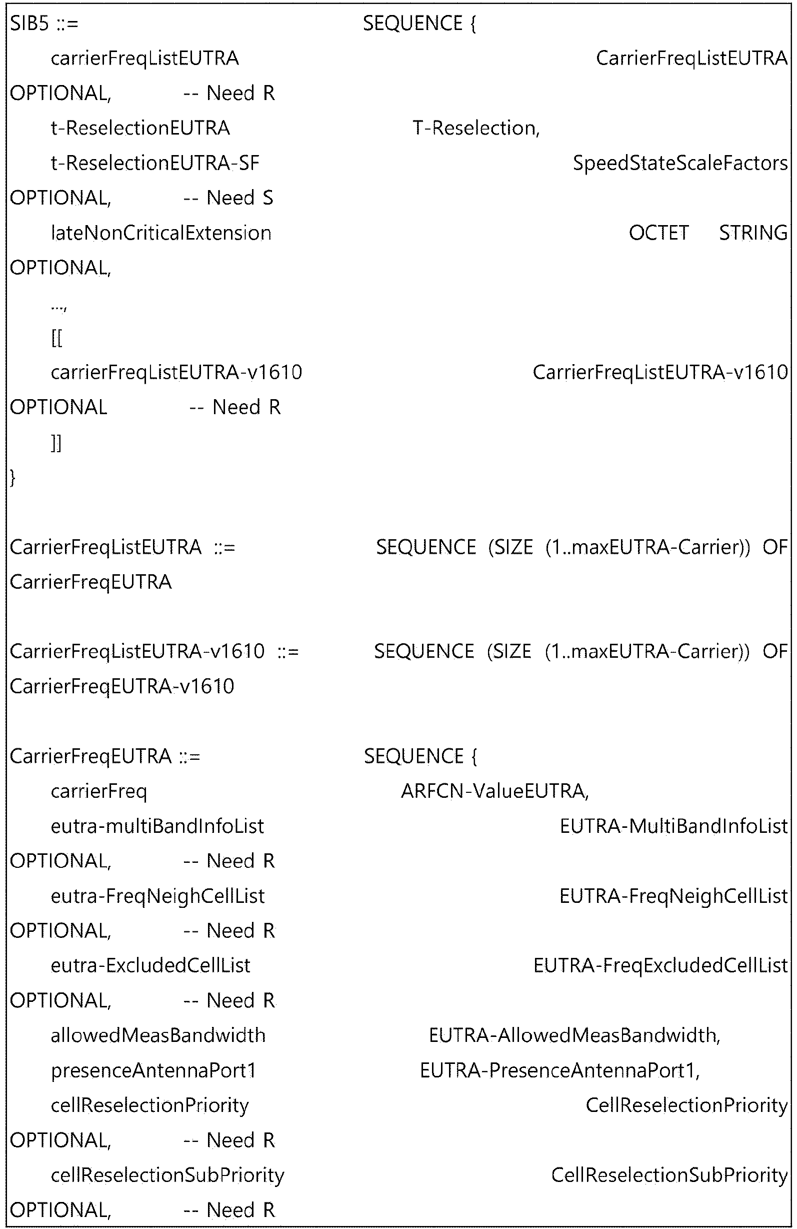

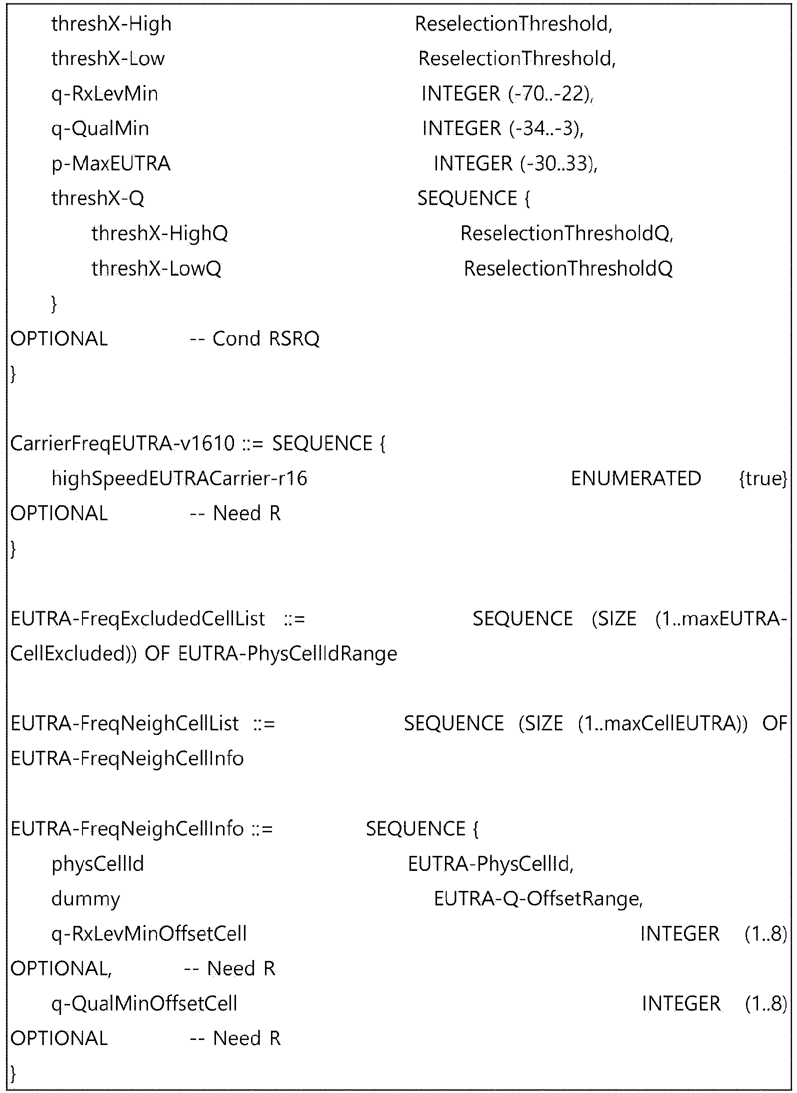

A UE in the RRC idle state or the RRC inactive state may perform a cell reselection evaluation process. The cell reselection evaluation procedure may refer to a series of processes of performing frequency measurement by applying reselection priorities handling and measurement rules for cell re-selection, and evaluating cell reselection criteria to reselect a cell.

In step 525, the UE 501 in the RRC idle state or the RRC inactive state may determine the reselection priority based on the RRC release message received in step 504 or the system information received in step 520. If cellReselectionPriorities is included in the RRC connection release message received in step 504 and there is no t320 timer value in cellReselectionPriorities, or if the t320 timer value is configured and the T320 timer is running, the UE 501 may determine the reselection priority according to the RRC connection release message. That is, if the celllReselectionPriorities included in the RRC connection release message may be applied, the UE 501 may determine the reselection priority according to the RRC connection release message. If cellReselectionPriorities is not included in the RRC connection release message or if cellReselectionPriorities is released, the UE 501 may determine the reselection priority based on the system information received in step 520. The UE 501 according to the disclosure may determine, based on the cell reselection priority value mapped to the NR frequency to which the currently camped-on serving cell belongs, whether the cell reselection priority for each NR inter-frequency or inter-RAT frequency has the same cell reselection priority as the NR frequency to which the serving cell belongs, has a higher cell reselection priority than the NR frequency to which the serving cell belongs, or has a lower cell reselection priority than the NR frequency to which the serving cell belongs. For example, in step 520, if the cell reselection priority value mapped to the NR frequency to which the currently camped-on serving cell belongs is 3 in the acquired system information, the cell reselection priority value of inter NR frequency 1 is 2, the cell reselection priority value of inter NR frequency 2 is 3, the cell reselection priority value of inter NR frequency 3 is 4, and the cell reselection priority value of EUTRA frequency 1 is 2, the UE 501 may determine inter NR frequency 1 and EUTRA frequency 1 as lower reselection priority, determine the cell reselection priority of inter NR frequency 2 as equal reselection priority, and determine the cell reselection priority of inter NR frequency 3 as higher reselection priority.

In step 530, the UE 501 in the RRC idle state or the RRC inactive state may perform frequency measurement for cell reselection. In this case, the UE 501 may perform frequency measurement using the following measurement rule according to the cell reselection priority determined in step 525 to minimize battery consumption.
- The UE 501 may not perform NR intra-frequency measurement if the following condition 1 is satisfied. Otherwise (e.g., if the following condition 1 is not satisfied), the UE 501 performs NR intra-frequency measurement:
   - Condition 1: Serving cell fulfils Srxlev > SIntraSearchP and Squal > SIntraSearchQ (the reception level (Srxlev) of the serving cell is greater than the SIntraSearchP threshold and the reception quality (Squal) of the serving cell is greater than the SIntraSearchQ threshold).
   - For NR inter-frequency or inter-RAT frequency having a higher reselection priority than the NR frequency of the current serving cell, the UE 501 may perform measurement according to the 3GPP TS 38.133 specification.
   - For NR inter-frequency having a lower or equal reselection priority than the NR frequency of the current serving cell and inter-RAT frequency having a lower reselection priority than the NR frequency of the current serving cell, the UE 501 may not perform measurement if the following condition 2 is satisfied. Otherwise, (e.g., if the following condition 2 is not satisfied), the UE 501 measures cells in NR inter-frequency having a lower or equal reselection priority than the NR frequency, or measures cells in inter-RAT frequency having a lower reselection priority than the NR frequency:
      - Condition 2: Serving cell fulfils Srxlev > SnonIntraSearchP and Squal > SnonIntraSearchQ (the reception level (Srxlev) of the serving cell is greater than the SnonIntraSearchP threshold and the reception quality (Squal) of the serving cell is greater than the SnonIntraSearchQ threshold).

For reference, the aforementioned thresholds (SintraSearchP, SintraSearchQ, SnonIntraSearchP, SnonintraSearchQ) may be included in the system information acquired by the UE 501 in step 520.

In step 535, the UE 501 in the RRC idle state or the RRC inactive state may determine to reselect a cell that satisfies the cell reselection criteria based on the measurement value performed in step 530. Different criteria may be applied to the cell reselection criteria according to the cell reselection priority. Cell reselection to a higher priority RAT/frequency shall take precedence over a lower priority RAT/frequency if multiple cells of different priorities fulfil the cell reselection criteria. Specifically, the operations of the UE 501 for the reselection criteria of an inter-frequency/inter-RAT cell having a higher priority than the frequency of the current serving cell are as follows: first operation to fifth operation.
- First operation:
   - If a threshold for threshServingLowQ is included and broadcast in SIB2 and, e.g., 1 second has passed since the UE 501 camped-on to the current serving cell, if the signal quality (Squal) of the inter-frequency/inter-RAT cell is greater than the threshold ThreshX,HighQ during a time interval TreselectionRAT (Squal > ThreshX,HighQ during a time interval TreselectionRAT), the UE performs reselection to the inter-frequency/inter-RAT cell.
- Second operation:
   - The UE 501 performs the second operation if it fails to perform the first operation.
   - If, e.g., 1 second has passed since the UE camped-on to the current serving cell and the reception level (Srxlev) of the inter-frequency/inter-RAT cell is greater than the threshold ThreshX,HighP during a time interval TreselectionRAT (Srxlev > ThreshX, HighP during a time interval Treselection-RAT-), the UE performs reselection to the inter-frequency/inter-RAT cell.

Here, the UE 501 performs the first operation or the second operation based on the information included in SIB4 broadcast in the serving cell for the signal quality (Squal), reception level (Srxlev), thresholds (Threh_{X, HighQ}, Thresh_{X, HighP}), and Treselection_{RAT} values of the inter-frequency cell, and the UE 501 performs the first operation or the second operation based on the information included in SIB5 broadcast in the serving cell for the signal quality (Squal), reception level (Srxlev), thresholds (Thresh_{X,HighQ,} Thresh_{X, HighP}), and Treselection_{RAT} values of the inter-RAT cell. For example, Q_{qualmin} value or Qᵣₓₗₑᵥₘᵢₙ value is included in SIB4, and based on this, the UE 501 derives the signal quality (Squal) or reception level (Srxlev) of the inter-frequency cell. If there are a plurality of cells in the NR frequency that satisfies the higher cell reselection priority, the UE 501 may reselect the highest ranked cell among the cells that satisfy the reselection criteria of the intra-frequency/inter-frequency cell having the same priority as the frequency of the current serving cell described below.

Further, the operations of the UE 501 for the reselection criteria of the intra-frequency/inter-frequency cell having the same priority as the frequency of the current serving cell are as follows.
- Third operation:
   - If the signal quality (Squal) and reception level (Srxlev) of the intra-frequency/inter-frequency cell are greater than 0, the UE 501 derives the Rank for each cell based on the measurement value (RSRP) (The UE shall perform ranking of all cells that fulfils the cell selection criterion S). The Ranks of the serving cell and the neighbor cell are calculated through Equation 2 below, respectively. [Equation 2] $\begin{matrix}{R}_{s} = {Q}_{meas , s} + {Q}_{hyst} - {Qoffset}_{temp} \\ {R}_{n} = {Q}_{meas , n} - Qoffset - {Qoffset}_{temp}\end{matrix}$
   - Here, Qmeas,s is the RSRP measurement value of the serving cell, Qmeas,n is the RSRP measurement value of the neighbor cell, Qhyst is the hysteresis value of the serving cell, and Qoffset is the offset between the serving cell and the neighbor cell. The Qhyst value is included in SIB2, and the value is commonly used for reselection of intra-frequency/inter-frequency cells. In the case of reselection of an intra-frequency cell, Qoffset is signaled per cell, is applied only to the indicated cell, and is included in SIB3. In the case of reselection of an inter-frequency cell, Qoffset is signaled per cell, is applied only to the indicated cell, and is included in SIB4. For the case where the Rank of the neighbor cell obtained from Equation 2 above is greater than the Rank of the serving cell (R-n > Rs), the UE reselects the cell as the best cell among neighbor cells.
   - Here, Qoffset-ₜₑₘₚ₋- is an offset temporarily applied to a cell, may mean connEstFailOffset included in ConnEstFailureControld broadcast in SIB1, and may be applied upon RRC connection failure (e.g., when T300 timer expires).

Further, the operations of the UE 501 for the reselection criteria of an inter-frequency/inter-RAT cell having a lower priority than the frequency of the current serving cell are as follows.
- Fourth operation:
   - If a threshold for threshServingLowQ is included and broadcast in SIB2 and 1 second has passed since the UE 501 camped-on to the current serving cell, if the signal quality (Sqaul) of the current serving cell is less than the threshold ThreshServing, LowQ (Squal < ThreshServing, LowQ) and the signal quality (Squal) of the inter-frequency/inter-RAT cell is greater than the threshold ThreshX, LowQ- during a time interval TreselectionRAT (Squal > ThreshX,LowQ during a time interval TreselectionRAT), the UE 501 performs reselection to the inter-frequency/inter-RAT cell.
- Fifth operation:
   - The UE 501 performs the fifth operation if it fails to perform the fourth operation.
   - If 1 second has passed since the UE 501 camped-on to the current serving cell, the reception level (Srxlev) of the current serving cell is less than the threshold ThreshServing, LowP (Srxlev < ThreshServing, LowP), and the reception level (Srxlev) of the inter-frequency/inter-RAT cell is greater than the threshold ThreshX, LowQ- during a time interval TreselectionRAT (Srxlev > ThreshX,LowP during a time interval TreselectionRAT), the UE performs reselection to the inter-frequency/inter-RAT cell.

Here, the fourth operation or the fifth operation of the UE 501 for the inter-frequency cell is performed based on the thresholds (Thresh_{Serving, LowQ}, Thresh_{Serving, LowP}) included in SIB2 broadcast in the serving cell and the signal quality (Squal), reception level (Srxlev), thresholds (Threh_{X, LowQ,} Thresh_{X, LowP}), and Treselection_{RAT} of the inter-frequency cell included in SIB4 broadcast in the serving cell, and the fourth operation or the fifth operation of the UE 501 for the inter-RAT cell is performed based on the thresholds (Thresh_{Serving, LowQ}, Thresh_{Serving, LowP}) included in SIB2 broadcast in the serving cell and the signal quality (Squal), reception level (Srxlev), thresholds (Thresh_{X,LowQ}, Thresh_{X, LowP}), and Treselection_{RAT} of the inter-RAT cell included in SIB5 broadcast in the serving cell. For example, Q_{qualmin} value or Qᵣₓₗₑᵥₘᵢₙ value is included in SIB4, and based on this, the UE derives the signal quality (Squal) or reception level (Srxlev) of the inter-frequency cell. If there are a plurality of cells in the NR frequency that satisfies the higher cell reselection priority, the UE 501 may reselect the highest ranked cell among the cells that satisfy the reselection criteria of the intra-frequency/inter-frequency cell having the same priority as the frequency of the current serving cell described below.

In step 540, before finally reselecting a candidate target cell, the UE 501 in the RRC idle state or the RRC inactive state receives system information (e.g., MIB or SIB1) broadcast in the candidate target cell, and determines whether the reception level (Srxlev) and reception quality (Squal) of the candidate target cell satisfies the cell selection criterion (Srxlev > 0 AND Squal > 0), referred to as S-criterion (see Equation 1 above), based on the received system information. The UE 501 may reselect the candidate target cell if Equation 1 above is satisfied and the candidate target cell is suitable.

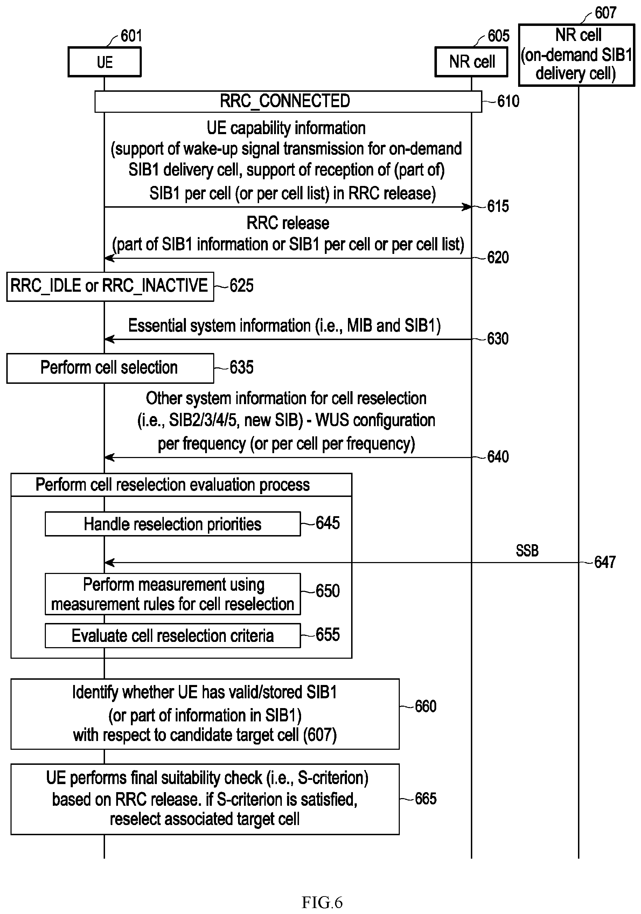

FIG. 6 is a view illustrating a procedure in which a UE in an RRC idle state (RRC_IDLE) or an RRC inactive state (RRC_INACTIVE) reselects a cell that transmits System Information Block 1 (SIB1) on-demand in a wireless communication system according to an embodiment of the disclosure.

A predetermined cell according to the disclosure may periodically transmit essential system information indicating at least one of Master Information Block (MIB) and System Information Block 1 (SIB1). The (essential) system information includes configuration information necessary for a UE to select or camp-on to a cell. Hereinafter, in the embodiments of the disclosure, the essential system information may be simply referred to as system information. Additionally, a predetermined cell according to the disclosure may, unlike the above-described embodiment (FIG. 5), periodically transmit MIB but transmit SIB1 in an on-demand manner. This is because network energy savings may be achieved by transmitting SIB1 only when there is a UE request.

Hereinafter, in the embodiments of the disclosure, the UE transmitting/receiving data to/from an NR cell may mean that the UE transmits/receives data to/from a base station of the NR cell. Further, in the embodiments of the disclosure, the NR cell from which the UE receives the RRC connection release message may be referred to as a first cell (or first base station), and the NR cell from which the UE receives on-demand SIB1 may be referred to as a second cell (or second base station).

Referring to FIG. 6, a UE 601 may establish an RRC connection with an NR cell 605 and be in an RRC connected state (RRC_CONNECTED) (610).

In step 615, the UE 601 may transmit UE capability information (UECapabilityInformation) to the NR cell 605. The UE capability information may include at least one of the following capability information.
- Capability information capable of transmitting a wake-up signal (hereinafter WUS), which is a signal for requesting to transmit SIB1 to a cell that transmits SIB1 on-demand
- Capability information capable of receiving SIB1 per cell or per cell list through the RRC connection release message
- Capability information capable of receiving part of SIB1 information per cell or per cell list through the RRC connection release message

In step 620, the NR cell 605 may transmit an RRC connection release message (RRCRelease) for releasing the RRC connection with the UE 601 in the RRC connected state. The information included in the RRC connection release message may at least follow the above-described embodiment (FIG. 5). Additionally, the RRC connection release message may include at least one of the following information 1-1) to 1-4).

### 1-1) SIB1 per cell:

- A cell may be represented by a physical cell identity (hereinafter PCI) or may be represented by PCI and a carrier frequency.
- In general, a cell may transmit SIB1 on-demand, and in the disclosure, by providing SIB1 (or at least part of SIB1) in advance to the UE 601, the process in which the UE 601 requests the cell to transmit SIB1 (i.e., on-demand SIB1 request) may be omitted, and the UE 601 may select or reselect the cell based on the SIB1 received in advance.

### 1-2) SIB1 per cell list:

- If one or a plurality of cells apply the same SIB1, the cell list and the SIB1 applied thereto may be included in the RRC connection release message.

### 1-3) SIB1 per frequency:

- If all cells in a frequency apply the same SIB1, the frequency and the SIB1 applied thereto may be included in the RRC connection release message. Here, the frequency means an Absolute Radio-Frequency Channel Number (AFRCN) (or a carrier frequency).

### 1-4) Some essential information in SIB1 per cell or per cell list or per frequency:

- Some parameters among the parameters included in SIB1 may be referred to as some essential information. For example, the some essential information may include at least one of the following information a) to c).
   a) At least one of the parameters (e.g., parameters in cellSelectionInfo) required for the UE 601 to determine the S criterion according to the above-described embodiment may be the some essential information in SIB1.
   b) At least one of the parameters (e.g., parameters in cellSelectionInfo, cellAccessRelatedInfo) required for the UE 601 to determine the suitable cell according to the above-described embodiment may be the some essential information in SIB1.
   c) At least one of the parameters (e.g., cellSelectionInfo, cellAccessRelatedInfo, onnEstFailureControl, servingCellConfigCommon, ue-TimersAndConstants, uac-BarringInfo, useFullResumeId) required for the UE 601 to access a cell may be some essential information in SIB1.

For example, SIB1 may include at least one of the information in the following [Table 8].

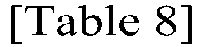

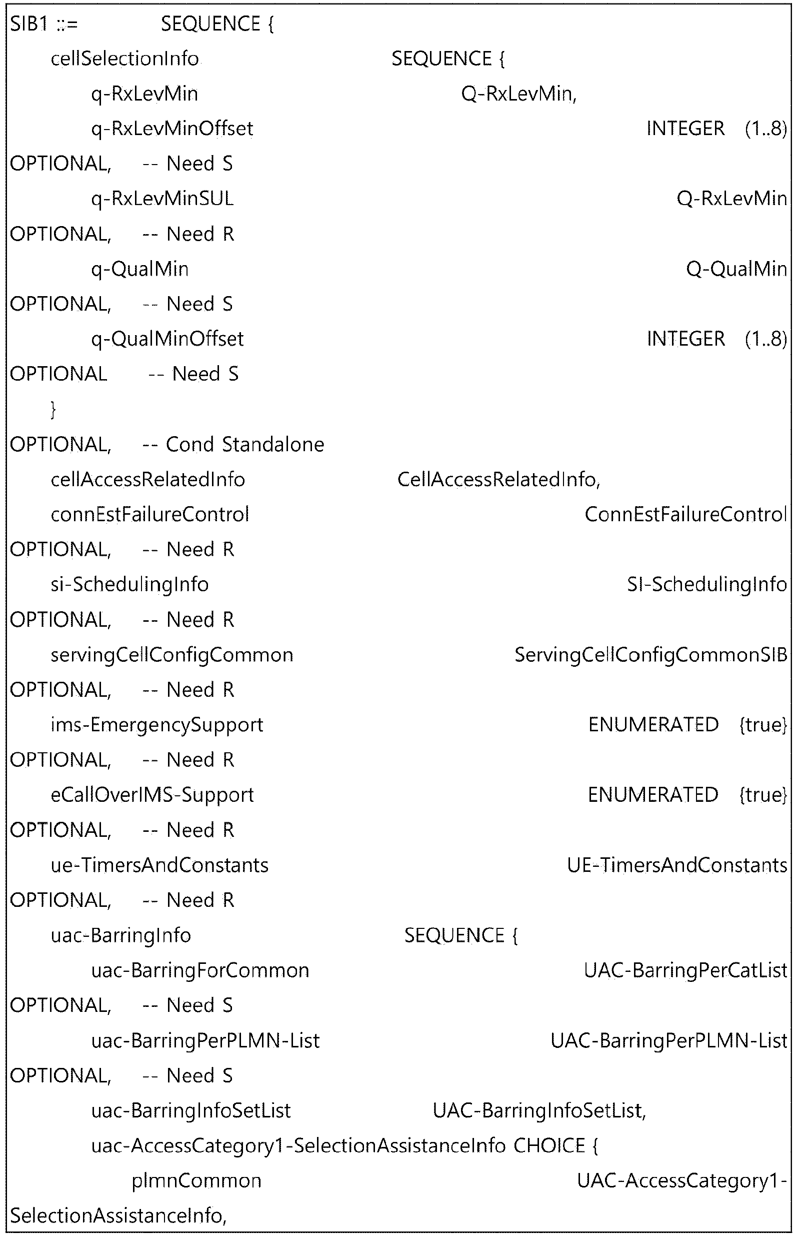

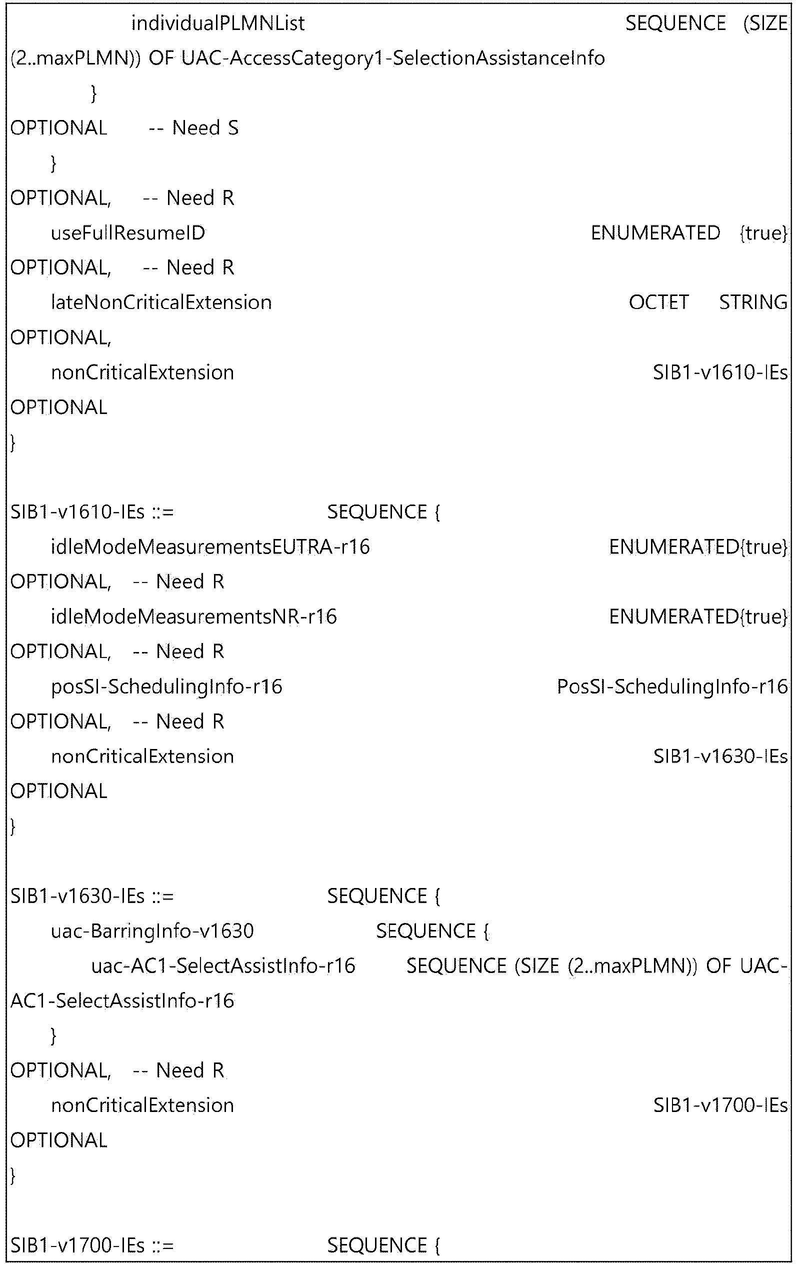

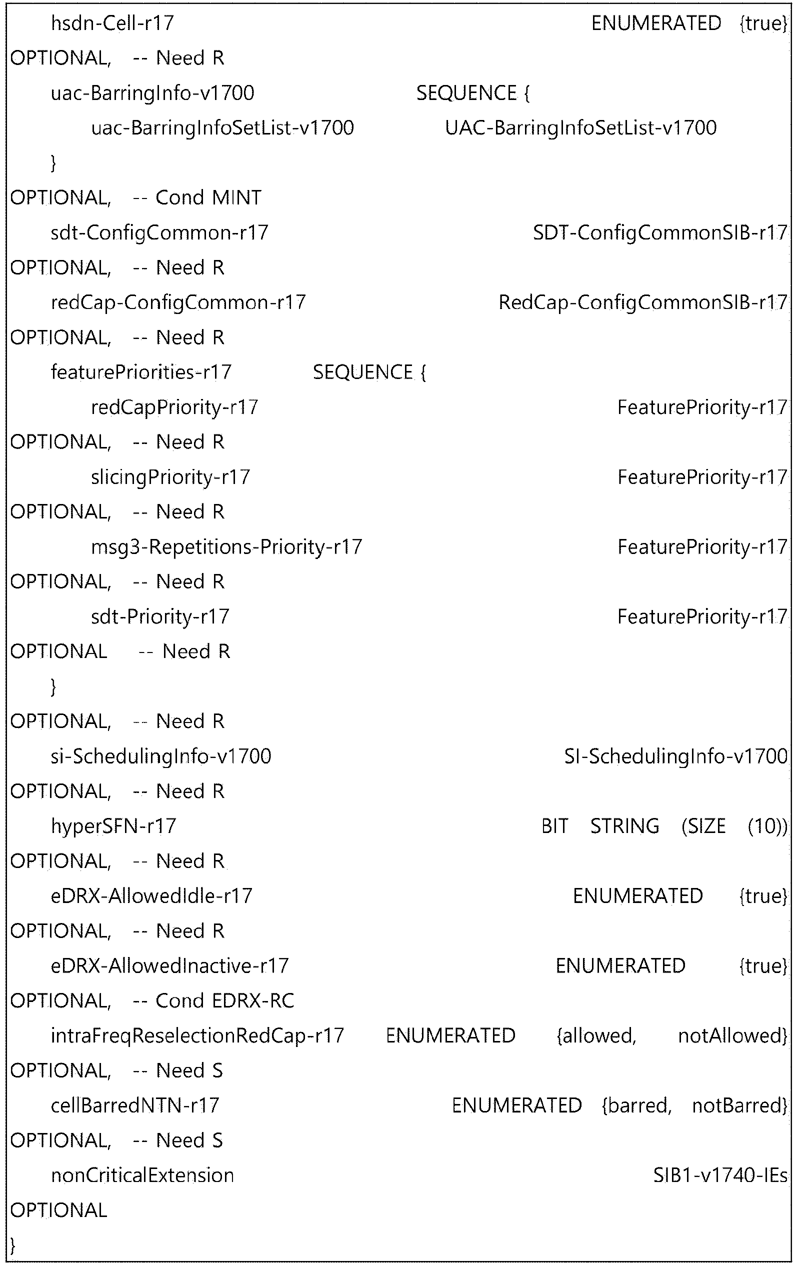

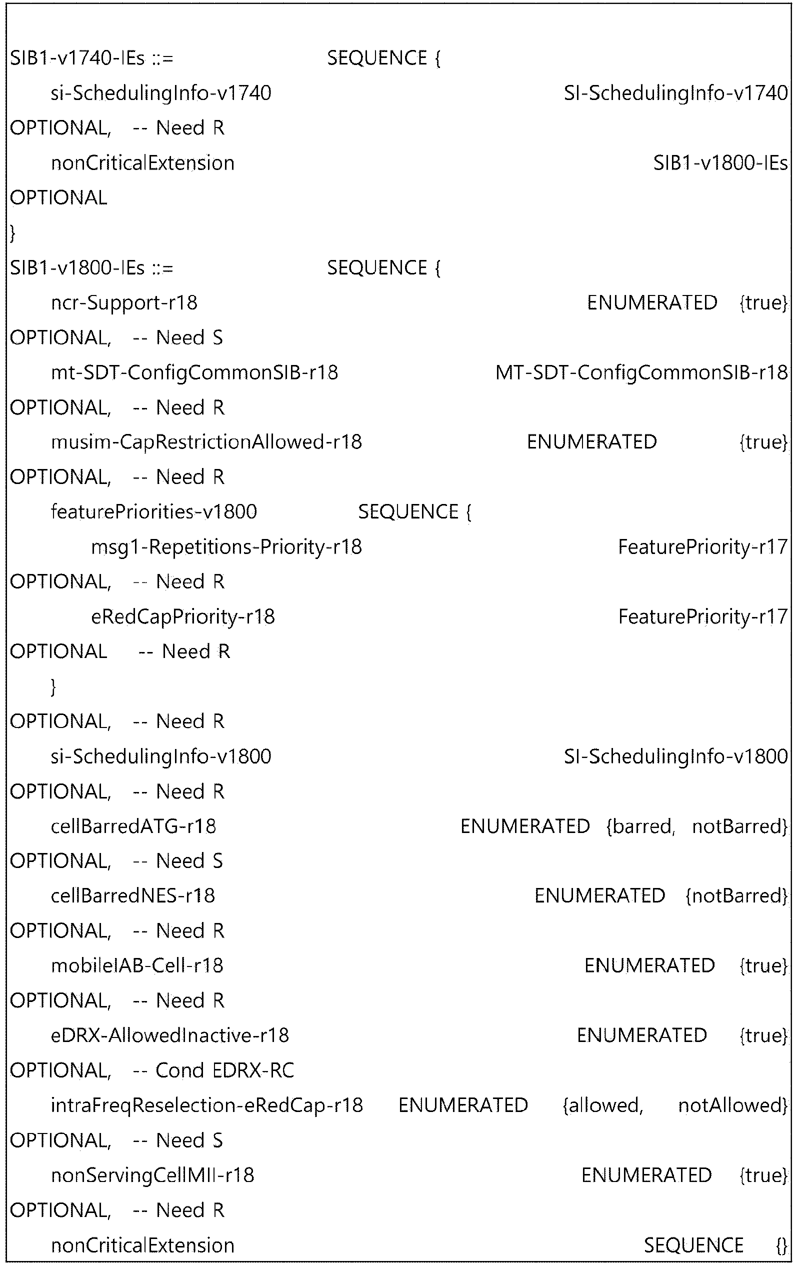

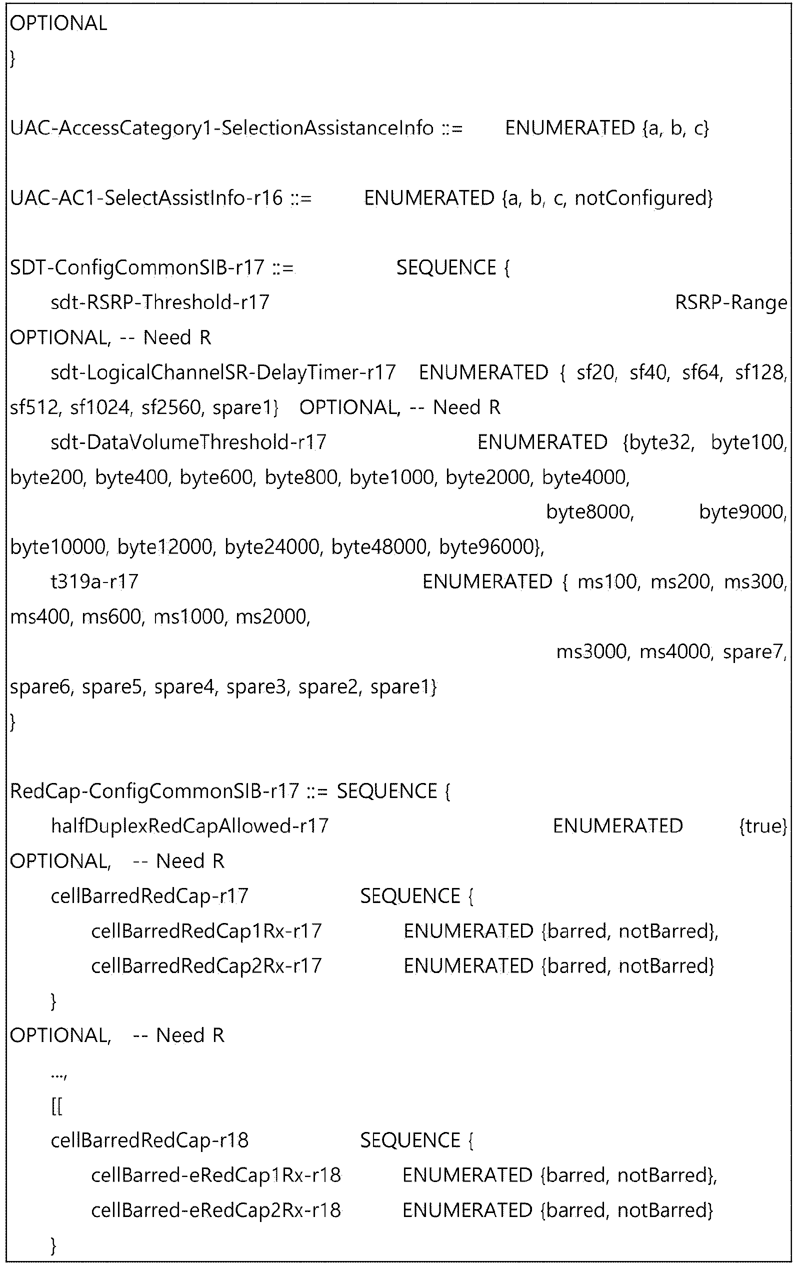

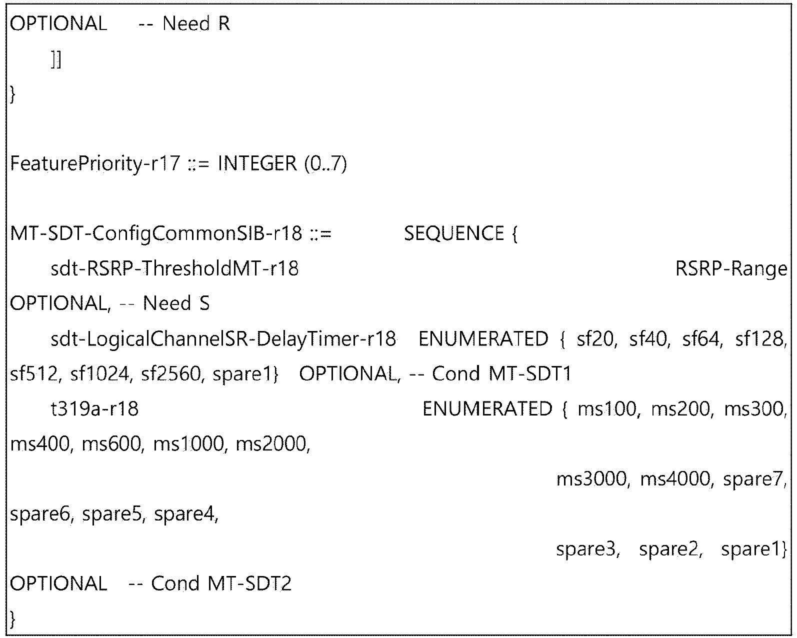

After applying/identifying the information included in the RRC connection release message, the UE 601 in the RRC connected state, as in the above-described embodiment, in step 625, the UE 601 may transition from the RRC connected state to the RRC idle state (RRC_IDLE) or the RRC inactive state (RRC_INACTIVE).

In step 630, the UE 601 in the RRC idle state or the RRC inactive state may acquire MIB and SIB1, which are essential system information, from the NR cell 605.

In step 635, the UE 601 may perform a cell selection procedure based on step 630. The basic operation of the cell selection procedure may follow the above-described embodiment of FIG. 5.

In step 640, the UE 601 may acquire system information (e.g., SIB2, SIB3, SIB4, SIB5, new SIB) including cell reselection information from the serving cell 605 to perform the cell reselection evaluation procedure. This may follow the above-described embodiment of FIG. 5. Additionally, the serving cell 605 according to the disclosure may broadcast system information including WUS configuration information. The serving cell 605 may include WUS configuration information in at least one of SIB2, SIB3, SIB4, and SIB5, or may transmit WUS configuration information to the UE 601 through new system information (new SIB). Specifically, the WUS configuration information may be included in the system information and provided to the UE using one of the following method 1 and method 2.
- Method 1: WUS configuration per frequency:
   - The serving cell 605 may provide WUS configuration information for the serving frequency (NR intra-frequency) to the UE 601 through SIB2 or SIB3, and WUS configuration information per neighboring NR frequency (NR inter-frequency) to the UE 601 through SIB4. Of course, by defining new system information (new SIB), the serving cell 605 may also provide WUS configuration information per frequency to the UE 601 through the new system information.
- Method 2: WUS configuration per cell (or per cell list) per frequency:
   - The serving cell 605 may provide WUS configuration information per cell or per cell list in the serving frequency (NR intra-frequency) to the UE 601 through SIB2 or SIB3, and WUS configuration information per cell per neighboring NR frequency (NR inter-frequency) or WUS configuration information per cell list per NR inter-frequency to the UE 601 through SIB4. Here, the WUS configuration information per cell list may mean that cells composed of one or more cells share WUS configuration information. Of course, by defining new system information (new SIB), the serving cell 605 may also provide WUS configuration information per cell (or per cell list) per frequency to the UE 601 through the new system information.

The WUS configuration information is random access parameters, and may include configuration information necessary for the UE 601 to transmit a random access preamble. For example, the WUS configuration information may include at least one of a random access preamble index (or index range), information on the number of synchronization signal/physical broadcast channel (PBCH) blocks (SSBs) per physical random access channel (PRACH) occasion, a reference signal received power (RSRP) threshold (rsrp-ThresholdSSB), and PRACH occasion position information (information on which a preamble, which is a physical signal specially designed for uplink synchronization, may be transmitted).

In step 645, the UE 601 may determine the reselection priority for cell reselection. This may follow the above-described embodiment (FIG. 5).

In step 647, the cell 607 that transmits SIB1 in an on-demand manner may transmit SSB, which is a synchronization signal.

In step 650, the UE 601 may perform frequency measurement for cell reselection. This may follow the above-described embodiment (FIG. 5).

In step 655, the UE 601 may determine a candidate target cell that satisfies the cell reselection criteria based on the measurement value performed in step 650. This may follow the above-described embodiment (FIG. 5). Accordingly, the UE according to the disclosure may determine the final candidate target cell as the NR cell 607. That is, the NR cell 607 may be the best cell or the highest ranked cell for the UE 601.

In step 660, the UE 601 may determine/identify whether it has received the SIB1 or some essential information in SIB1, which is configuration information necessary to reselect the NR cell 607, through the RRC connection release message in step 620. For reference, the NR cell 607 may be a cell that transmits SIB1 on-demand.

In step 665, the UE 601 determines whether the reception level (Srxlev) and reception quality (Squal) of the candidate target cell 607 satisfies the cell selection criterion (Srxlev > 0 AND Squal > 0), referred to as S-criterion (see Equation 1, the above-described embodiment of FIG. 5), based on the MIB received from the candidate target cell 607 and the SIB1 information (or some essential information in SIB1) for the cell 607 received through the RRC connection release message in step 620. The UE 601 may reselect the candidate target cell 607 if the S-criterion is satisfied and the candidate target cell 607 is suitable. As an optional embodiment, the UE 601 may transmit WUS to the candidate target cell 607 to acquire SIB1 from the candidate target cell 607 in order to access the candidate target cell 607 (i.e., operation for transitioning to the RRC connected state).

As in the embodiment of FIG. 6, the UE 601 may receive configuration information for selecting or reselecting a cell that transmits SIB1 on-demand through the RRC connection release message. Accordingly, the UE may select or reselect the cell even without transmitting WUS to the cell that transmits SIB1 on-demand. As an optional embodiment, the UE 601 may delete the SIB1 per cell (or per cell list or per frequency) (or some essential information in SIB1) received through the RRC connection release message if at least one of the following conditions 2-1) to 2-4) is satisfied.
2-1) When the selected or reselected cell is not a cell configured in the RRC connection release message
2-2) When the RRC state of the UE is changed or transitions to the RRC connected state
2-3) When Inter-RAT cell selection or reselection occurs
2-4) When Public Land Mobile Network (PLMN) selection or Standalone Non-Public Network (SNPN) selection is performed due to a Non-Access Stratum (NAS) request

Of course, the UE 601 may also maintain the SIB1 per cell (or per cell list or per frequency) (or some essential information in SIB1) received through the RRC connection release message even if at least one of the conditions 2-1) to 2-4) is satisfied. This is because, when maintained, the UE 601 may select or reselect the cell even without transmitting WUS to the cell that transmits SIB1 on-demand.

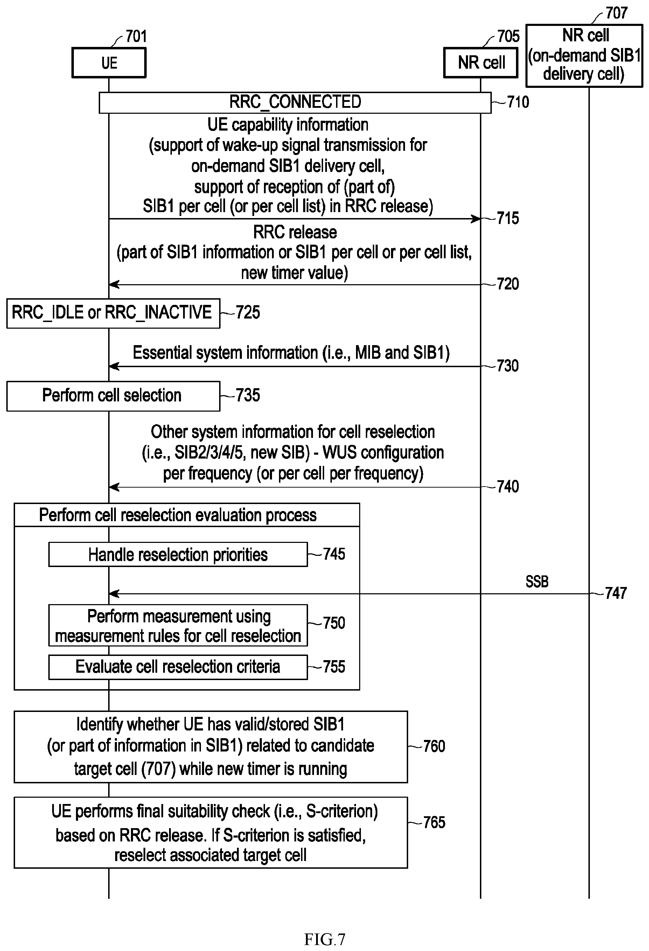

FIG. 7 is a view illustrating a procedure in which a UE in an RRC idle state (RRC_IDLE) or an RRC inactive state (RRC_INACTIVE) reselects a cell that transmits System Information Block 1 (SIB1) on-demand in a wireless communication system according to an embodiment of the disclosure.

A predetermined cell according to the disclosure may periodically transmit essential system information indicating at least one of Master Information Block (MIB) and System Information Block 1 (SIB1). The essential system information includes configuration information necessary for a UE to select or camp-on to a cell. Additionally, a predetermined cell according to the disclosure may, unlike the above-described embodiment (FIG. 5), periodically transmit MIB but transmit SIB1 in an on-demand manner. This is because network energy savings may be achieved by transmitting SIB1 only when there is a UE request.

Referring to FIG. 7, a UE 701 may establish an RRC connection with an NR cell 705 and be in an RRC connected state (RRC_CONNECTED) (710).

In step 715, the UE 701 may transmit UE capability information (UECapabilityInformation) to the NR cell 705. The UE capability information may include at least one of the following capability information.
- Capability information capable of transmitting a wake-up signal (hereinafter WUS), which is a signal for requesting to transmit SIB1 to a cell that transmits SIB1 on-demand
- Capability information capable of receiving SIB1 per cell or per cell list through the RRC connection release message
- Capability information capable of receiving part of SIB1 information per cell or per cell list through the RRC connection release message

In step 720, the NR cell 705 may transmit an RRC connection release message (RRCRelease) for releasing the RRC connection with the UE 701 in the RRC connected state. The RRC connection release message may include at least one of each of the information 1-1) to 1-4) described in the embodiment of FIG. 6 above and the following new timer value information.

### - New timer value:

The new timer value may mean a timer value that controls until when (i.e., the applicable period) the UE applies SIB1 per cell (or per cell list or per frequency) or some essential information in SIB1 per cell (or per cell list or per frequency) received in the RRC connection release message. For example, the UE that has received the new timer value may operate a new timer with the timer value after receiving the RRC connection release message. The UE 701 may use SIB1 per cell (or per cell list or per frequency) or some essential information in SIB1 per cell (or per cell list or per frequency) received through the RRC connection release message while the new timer is running. When the timer is stopped or expires, the UE 701 may release SIB1 per cell (or per cell list or per frequency) or some essential information in SIB1 per cell (or per cell list or per frequency) received through the RRC connection release message.

After applying/identifying the information included in the RRC connection release message, the UE 701 in the RRC connected state, as in the above-described embodiment, in step 725, the UE 701 may transition from the RRC connected state to the RRC idle state (RRC_IDLE) or the RRC inactive state (RRC_INACTIVE).

In step 730, the UE 701 in the RRC idle state or the RRC inactive state may acquire MIB and SIB1, which are essential system information, from the NR cell 705.

In step 735, the UE 701 may perform a cell selection procedure based on step 730. The basic operation of the cell selection procedure may follow the above-described embodiment of FIG. 5.

In step 740, the UE 701 may acquire system information (e.g., SIB2, SIB3, SIB4, SIB5, new SIB) including cell reselection information from the serving cell 705 to perform the cell reselection evaluation procedure. This may follow at least one of the above-described embodiments of FIGS. 5 and 6.

In step 745, the UE 701 may determine the reselection priority for cell reselection. This may follow the above-described embodiment (FIG. 5).

In step 747, the cell 707 that transmits SIB1 in an on-demand manner may transmit SSB (Synchronization Signal/PBCH block, hereinafter SSB), which is a synchronization signal.

In step 750, the UE 701 may perform frequency measurement for cell reselection. This may follow the above-described embodiment (FIG. 5).

In step 755, the UE 701 may determine a candidate target cell that satisfies the cell reselection criteria based on the measurement value performed in step 750. This may follow the above-described embodiment (FIG. 5). Accordingly, the UE according to the disclosure may determine the final candidate target cell as the NR cell 707. That is, the NR cell 707 may be the best cell or the highest ranked cell for the UE 701.

In step 760, the UE 701 may determine/identify whether the new timer operated in step 720 is running and whether it has received the SIB1 or some essential information included in SIB1, which is configuration information necessary to reselect the NR cell 707, through the RRC connection release message in step 720. For reference, the NR cell 707 may be a cell that transmits SIB1 on-demand.

In step 765, the UE 701 determines whether the reception level (Srxlev) and reception quality (Squal) of the candidate target cell 707 satisfies the cell selection criterion (Srxlev > 0 AND Squal > 0), referred to as S-criterion (see Equation 1, the above-described embodiment of FIG. 5), based on the MIB received from the candidate target cell 707 and the SIB1 information (or some essential information in SIB1) for the cell 707 received through the RRC connection release message in step 720. The UE 701 may reselect the candidate target cell 707 if the S-criterion is satisfied and the candidate target cell 707 is suitable. As an optional embodiment, the UE 701 may transmit WUS to the candidate target cell 607 to acquire SIB1 from the candidate target cell 607 in order to access the candidate target cell 707 (i.e., operation for transitioning to the RRC connected state).

As in the embodiment of FIG. 7, the UE 701 may receive configuration information for selecting or reselecting a cell that transmits SIB1 on-demand through the RRC connection release message. The valid applicable period for the configuration information may be while the new timer is running. Accordingly, the UE may select or reselect the cell even without transmitting WUS to the cell that transmits SIB1 on-demand. As an optional embodiment, the UE 701 may stop the running new timer if at least one of the following conditions 3-1) to 3-5) is satisfied.
3-1) When the selected or reselected cell is not a cell configured in the RRC connection release message
3-2) When the RRC state is changed or transitions to the RRC connected state
3-3) When Inter-RAT cell selection or reselection occurs
3-4) When Public Land Mobile Network (PLMN) selection or Standalone Non-Public Network (SNPN) selection is performed due to a Non-Access Stratum (NAS) request
3-5) When the received SIB1 per cell (or per cell list or per frequency) (or some essential information in SIB1) is not configured in the received RRC connection release message, or when the new timer value is not configured

Of course, the UE 701 may continue to operate the running new timer even if at least one of the conditions 3-1) to 3-5) is satisfied. This is because the UE 701 may select or reselect the cell even without transmitting WUS to the cell that transmits SIB1 on-demand. As an optional embodiment, the UE 701 may delete the SIB1 per cell (or per cell list or per frequency) (or some essential information in SIB1) received through the RRC connection release message when the running new timer is stopped or when the running new timer expires.

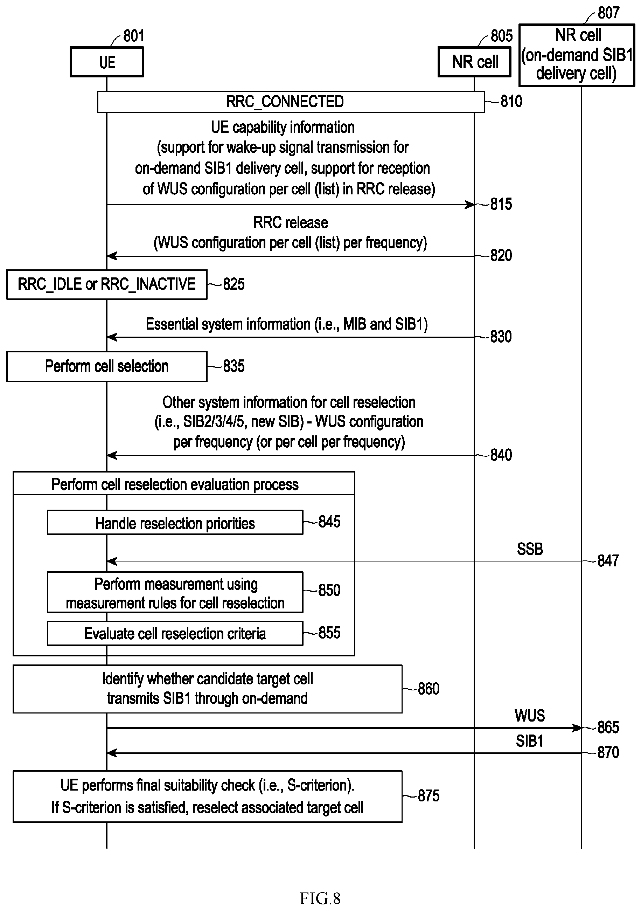

FIG. 8 is a view illustrating a procedure in which a UE in an RRC idle state (RRC_IDLE) or an RRC inactive state (RRC_INACTIVE) reselects a cell that transmits System Information Block 1 (SIB1) on-demand in a wireless communication system according to an embodiment of the disclosure.

A predetermined cell according to the disclosure may periodically transmit essential system information indicating at least one of Master Information Block (MIB) and System Information Block 1 (SIB1). The essential system information includes configuration information necessary for a UE to select or camp-on to a cell. Additionally, a predetermined cell according to the disclosure may, unlike the above-described embodiment (FIG. 5), periodically transmit MIB but transmit SIB1 in an on-demand manner. This is because network energy savings may be achieved by transmitting SIB1 only when there is a UE request.

Referring to FIG. 8, in step 810, a UE 801 may establish an RRC connection with an NR cell 805 and be in an RRC connected state (RRC_CONNECTED).

In step 815, the UE 801 may transmit UE capability information (UECapabilityInformation) to the NR cell 805. The UE capability information may include at least one of the following capability information.
- Capability information capable of transmitting a wake-up signal (hereinafter WUS), which is a signal for requesting to transmit SIB1 to a cell that transmits SIB1 on-demand
- Capability information capable of receiving SIB1 per cell or per cell list through the RRC connection release message
- Capability information capable of receiving part of SIB1 information per cell or per cell list through the RRC connection release message

Additionally, the UE capability information may include capability information capable of applying and using configuration information for a wake-up signal (hereinafter WUS), which is a signal for requesting to transmit SIB1 to a cell that transmits SIB1 on-demand through the RRC connection release message (and/or system information).

In step 820, the NR cell 805 may transmit an RRC connection release message (RRCRelease) to release the RRC connection with the UE 801 in the RRC connected state. The RRC connection release message may include at least one of each of the information 1-1) to 1-4) described in the embodiment of FIG. 6 above, the new timer value in the embodiment of FIG. 7 above, and each of the following information 4-1) and 4-2).
4-1) An indicator indicating whether the UE 801 is permitted to transmit WUS
4-2) Configuration information required when the UE 801 transmits WUS:
   - The configuration information may be configured per frequency, or per cell per frequency, or per cell list per frequency.
   - The configuration information may indicate one or a plurality of random access preambles. For example, it may mean a preamble indicating the message (Msg1) that the UE first transmits to the base station during the random access procedure.
   - The configuration information may indicate one or a plurality of random access opportunities (PRACH occasions) at which the UE may transmit the preamble. For example, a RACH occasion may indicate at which frequency/time to send the preamble when transmitting the preamble during the random access procedure.

After applying/identifying the information included in the RRC connection release message, the UE 801 in the RRC connected state, as in the above-described embodiment, in step 825, the UE 801 may transition from the RRC connected state to the RRC idle state (RRC_IDLE) or the RRC inactive state (RRC_INACTIVE).

In step 830, the UE 801 in the RRC idle state or the RRC inactive state may acquire MIB and SIB1, which are essential system information, from the NR cell 805.

In step 835, the UE 801 may perform a cell selection procedure based on step 830. The basic operation of the cell selection procedure may follow the above-described embodiment of FIG. 5.

In step 840, the UE 801 may acquire system information (e.g., SIB2, SIB3, SIB4, SIB5, new SIB) including cell reselection information from the serving cell 805 to perform the cell reselection evaluation procedure. This may follow at least one of the above-described embodiments of FIGS. 5 to 7.

In step 845, the UE 801 may determine the reselection priority for cell reselection. This may follow the above-described embodiment (FIG. 5).

In step 847, the cell 807 that transmits SIB1 in an on-demand manner may transmit SSB (Synchronization Signal/PBCH block, hereinafter SSB), which is a synchronization signal.

In step 850, the UE 801 may perform frequency measurement for cell reselection. This may follow the above-described embodiment (FIG. 5).

In step 855, the UE 801 may determine a candidate target cell that satisfies the cell reselection criteria based on the measurement value performed in step 850. This may follow the above-described embodiment (FIG. 5). Accordingly, the UE according to the disclosure may determine the final candidate target cell as the NR cell 807. That is, the NR cell 807 may be the best cell or the highest ranked cell for the UE 801.

In step 860, the UE 801 may identify that the NR cell 807 transmits SIB1 on-demand. For example, the UE may identify whether the NR cell 807 transmits SIB1 on-demand through the RRC connection release message (step 820) or through the system information (step 840). Hereinafter, in the present embodiment, it is assumed that the candidate target NR cell 807 may transmit SIB1 on-demand.

In step 865, the UE 801 may transmit WUS to the candidate target NR cell 807 to receive SIB1 from the candidate target NR cell 807. For example, if the WUS configuration information for the candidate target NR cell 807 may be applied through the RRC connection release message (step 820), the UE 801 may transmit WUS to the candidate target NR cell 807 to receive SIB1 from the candidate target NR cell 807 based on the WUS configuration information. As an optional embodiment, if the UE 801 cannot apply the WUS configuration information for the candidate target NR cell 807 through the RRC connection release message and may apply the WUS configuration information for the candidate target NR cell 807 through the system information (step 840), the UE 801 may transmit WUS to the candidate target NR cell 807 to receive SIB1 from the candidate target NR cell 807 based on the WUS configuration information received through the system information (step 840). That is, the UE 801 may prioritize the WUS configuration information configured in the RRC connection release message over the WUS configuration information broadcast in the system information.

In step 870, the NR cell 807 may transmit SIB1, and the UE 801 may receive the SIB1. The UE 801 may receive the MIB transmitted by the NR cell 807 in step 870 or in a previous step (e.g., step 847 or step 855 or step 860).

In step 875, the UE 801 determines whether the reception level (Srxlev) and reception quality (Squal) of the candidate target NR cell satisfies the cell selection criterion (Srxlev > 0 AND Squal > 0), referred to as S-criterion (see Equation 1, the above-described embodiment of FIG. 5), based on the essential system information (MIB and/or SIB1) received from the candidate target NR cell 807. The UE 801 may reselect the candidate target NR cell 807 if the S-criterion is satisfied and the candidate target NR cell 807 is suitable.

The UE 801 according to the disclosure may transmit WUS to the candidate target NR cell 807 that transmits SIB1 on-demand to receive SIB1 from the candidate target NR cell 807. The UE 801 may acquire configuration information for transmitting the WUS through the RRC connection release message or through the system information. As an optional embodiment, the UE 801 may delete/ignore the WUS configuration information received through the RRC connection release message if at least one of the following conditions 5-1) to 5-4) is satisfied.
5-1) When the selected or reselected cell is not a cell configured in the RRC connection release message
5-2) When the RRC state is changed or transitions to the RRC connected state
5-3) When Inter-RAT cell selection or reselection occurs
5-4) When Public Land Mobile Network (PLMN) selection or Standalone Non-Public Network (SNPN) selection is performed due to a Non-Access Stratum (NAS) request

Of course, the UE 801 may also maintain the WUS configuration information received through the RRC connection release message even when at least one of the conditions 5-1) to 5-4) is satisfied. This is because the UE 801 may later select or reselect a cell that may use the WUS configuration information received through the RRC connection release message.

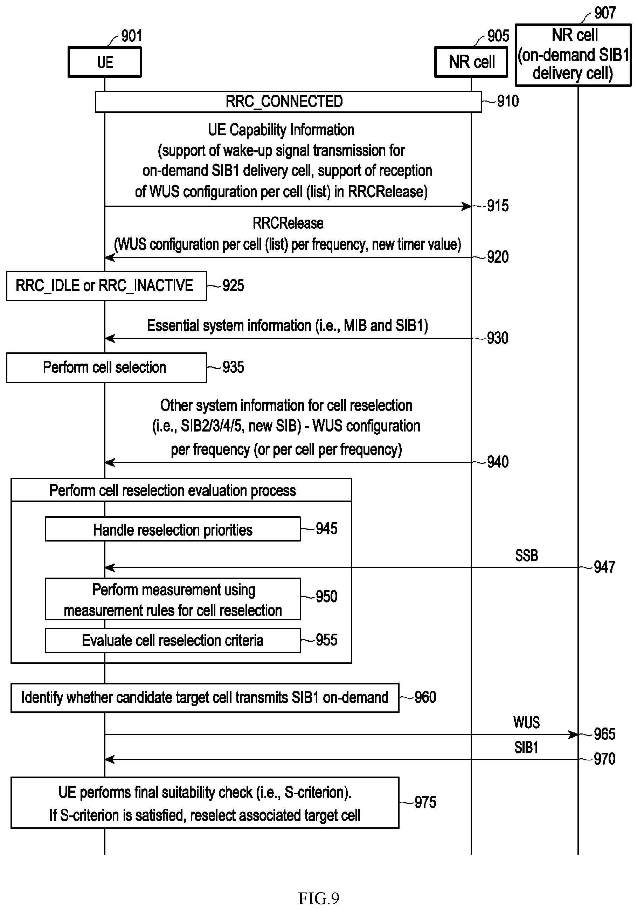

FIG. 9 is a view illustrating a procedure in which a UE in an RRC idle state (RRC_IDLE) or an RRC inactive state (RRC_INACTIVE) reselects a cell that transmits System Information Block 1 (SIB1) on-demand in a wireless communication system according to an embodiment of the disclosure.

A predetermined cell according to the disclosure may periodically transmit essential system information indicating at least one of Master Information Block (MIB) and System Information Block 1 (SIB1). The essential system information includes configuration information necessary for a UE to select or camp-on to a cell. Additionally, a predetermined cell according to the disclosure may, unlike the above-described embodiment (FIG. 5), periodically transmit MIB but transmit SIB1 in an on-demand manner. This is because network energy savings may be achieved by transmitting SIB1 only when there is a UE request.

Referring to FIG. 9, a UE 901 may establish an RRC connection with an NR cell 905 and be in an RRC connected state (RRC_CONNECTED) (910).

In step 915, the UE 901 may transmit UE capability information (UECapabilityInformation) to the NR cell 905. The UE capability information may include at least one of the following capability information.
- Capability information capable of transmitting a wake-up signal (hereinafter WUS), which is a signal for requesting to transmit SIB1 to a cell that transmits SIB1 on-demand
- Capability information capable of receiving SIB1 per cell or per cell list through the RRC connection release message
- Capability information capable of receiving part of SIB1 information per cell or per cell list through the RRC connection release message
- Capability information capable of applying and using configuration information for a wake-up signal (hereinafter WUS), which is a signal for requesting to transmit SIB1 to a cell that transmits SIB1 on-demand through the RRC connection release message (and/or system information)

In step 920, the NR cell 905 may transmit an RRC connection release message (RRCRelease) to release the RRC connection with the UE 901 in the RRC connected state. The RRC connection release message may include at least one of each of the information 1-1) to 1-4) described in the embodiment of FIG. 6 above, the new timer value (hereinafter, first timer value) in the embodiment of FIG. 7 above, each of the information 4-1) and 4-2) in the embodiment of FIG. 8 above, and the following new timer value (hereinafter, second timer value).
- New timer value: The new timer value may mean a timer value that controls until when the UE 901 applies the configuration information required when transmitting WUS received in the RRC connection release message. The UE 901 that has received the new timer value may operate the timer with the value after receiving the RRC connection release message. While the timer is running, the configuration information required when transmitting WUS received through the RRC connection release message may be used. When the timer is stopped or expires, the configuration information required when transmitting WUS received through the RRC connection release message may be released.

After applying/identifying the information included in the RRC connection release message, the UE 901 in the RRC connected state, as in the above-described embodiment, in step 925, the UE may transition (925) from the RRC connected state to the RRC idle state (RRC_IDLE) or the RRC inactive state (RRC_INACTIVE).

In step 930, the UE 901 in the RRC idle state or the RRC inactive state may acquire MIB and SIB1, which are essential system information, from the NR cell 905.

In step 935, the UE 901 may perform a cell selection procedure based on step 930. The basic operation of the cell selection procedure may follow the above-described embodiment of FIG. 5.

In step 940, the UE 901 may acquire system information (e.g., SIB2, SIB3, SIB4, SIB5, new SIB) including cell reselection information from the serving cell 905 to perform the cell reselection evaluation procedure. This may follow at least one of the above-described embodiments of FIGS. 5 to 8.

In step 945, the UE 901 may determine the reselection priority for cell reselection. This may follow the above-described embodiment (FIG. 5).

In step 947, the cell 907 that transmits SIB1 in an on-demand manner may transmit SSB (Synchronization Signal/PBCH block, hereinafter SSB), which is a synchronization signal.

In step 950, the UE 901 may perform frequency measurement for cell reselection. This may follow the above-described embodiment (FIG. 5).

In step 955, the UE 901 may determine a candidate target cell that satisfies the cell reselection criteria based on the measurement value performed in step 950. This may follow the above-described embodiment (FIG. 5). Accordingly, the UE according to the disclosure may determine the final candidate target cell as the NR cell 907. That is, the NR cell 907 may be the best cell or the highest ranked cell for the UE 901.

In step 960, the UE 901 may identify that the NR cell 907 transmits SIB1 on-demand. For example, the UE 901 may identify whether the NR cell transmits SIB1 on-demand through the RRC connection release message (step 920) or through the system information (step 940). Hereinafter, in the present embodiment, it is assumed that the candidate target NR cell 907 may transmit SIB1 on-demand.

In step 965, the UE 901 may transmit WUS to the candidate target NR cell 807 to receive SIB1 from the candidate target NR cell 907. For example, if the new timer operated in step 920 is running and the WUS configuration information for the candidate target NR cell 907 may be applied through the RRC connection release message (step 920), the UE 901 may transmit WUS to the candidate target NR cell 807 to receive SIB1 from the candidate target NR cell 907 based on the WUS configuration information. As an optional embodiment, if the UE 901 cannot apply the WUS configuration information for the candidate target NR cell 907 through the RRC connection release message and may apply the WUS configuration information for the candidate target NR cell 907 through the system information (step 940), the UE 901 may transmit WUS to the candidate target NR cell 907 to receive SIB1 from the candidate target NR cell 907 based on the WUS configuration information received through the system information (step 940). That is, the UE 901 may prioritize the WUS configuration information configured in the RRC connection release message over the WUS configuration broadcast in the system information.

In step 970, the NR cell 907 may transmit SIB1, and the UE 901 may receive the SIB1. For reference, the UE 901 may receive the MIB transmitted by the NR cell 907 in step 970 or in a previous step (e.g., step 947 or step 955 or step 960).

In step 975, the UE 901 determines whether the reception level (Srxlev) and reception quality (Squal) of the candidate target NR cell satisfies the cell selection criterion (Srxlev > 0 AND Squal > 0), referred to as S-criterion (see Equation 1, the above-described embodiment of FIG. 5), based on the essential system information (MIB and/or SIB1) received from the candidate target NR cell 907. The UE 901 may reselect the candidate target NR cell 907 if the S-criterion is satisfied and the candidate target NR cell 907 is suitable.

The UE 901 according to the disclosure may transmit WUS to the candidate target NR cell 907 that transmits SIB1 on-demand to receive SIB1 from the candidate target NR cell 907. The UE 901 may acquire configuration information for transmitting the WUS through the RRC connection release message or through the system information. As an optional embodiment, the UE 901 may stop the running new timer if at least one of the following conditions 6-1) to 6-5) is satisfied.
6-1) When the selected or reselected cell is not a cell configured in the RRC connection release message
6-2) When the RRC state is changed or transitions to the RRC connected state
6-3) When Inter-RAT cell selection or reselection occurs
6-4) When Public Land Mobile Network (PLMN) selection or Standalone Non-Public Network (SNPN) selection is performed due to a Non-Access Stratum (NAS) request
6-5) When the configuration information required when transmitting WUS is not configured in the received RRC connection release message, or when the new timer value is not configured

Of course, the UE 901 may continue to operate the running new timer even when at least one of the conditions 6-1) to 6-5) is satisfied. This is because the UE 901 may later select or reselect a cell that may use the WUS configuration information received through the RRC connection release message. As an optional embodiment, the UE 901 may delete the WUS configuration information received through the RRC connection release message when the running new timer is stopped or when the running new timer expires.

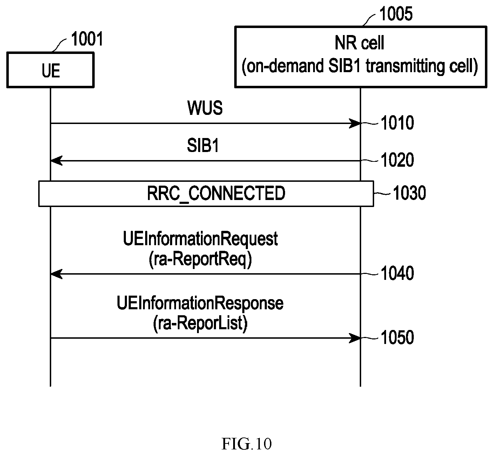

FIG. 10 is a view illustrating a procedure in which a UE performs a random access procedure with a base station to request System Information Block 1 (SIB1) and the UE reports related information to the base station in a wireless communication system according to an embodiment of the disclosure.

In the disclosure, the UE may trigger the random access procedure to acquire SIB1 from a cell that transmits SIB1 in an on-demand manner. Specifically, the UE may transmit a wake-up signal (hereinafter WUS) through PRACH preamble(s) at RACH resource(s), and accordingly acquire SIB1 from the base station of the cell.

Referring to FIG. 10, in step 1010, a UE 1001 may trigger a random access procedure according to a predetermined event (e.g., cell selection or cell reselection) to transmit WUS to a cell 1005 that transmits SIB1 in an on-demand manner. The WUS configuration information of the UE 1001 and the method of acquiring it may be based on at least one of the above-described embodiments. The UE 1001 may transmit a wake-up signal (hereinafter WUS) to the cell 1005 through PRACH preamble(s) at RACH resource(s).

In step 1020, the UE 1001 may acquire SIB1 transmitted by the cell 1005 based on the WUS. When the UE 1001 receives an acknowledgement for the SIB1 request from lower layers, the UE 1001 may acquire the requested SIB1 from the cell 1005.

In step 1030, the UE 1001 that has acquired the SIB1 may establish an RRC connection with the cell 1005 and enter an RRC connected state (RRC_CONNECTED). The UE 1001 may enter the RRC connected state from an RRC idle state (RRC_IDLE) or an RRC inactive state (RRC_INACTIVE) through an RRC connection establishment procedure or an RRC connection resume procedure with the cell.

In step 1040, the cell 1005 may transmit a UE information request message (UEInformationRequest) including ra-ReportReq requesting the following RA-Report to the UE 1001.

In step 1050, the UE 1001 that has received the ra-ReportReq may transmit a UE information response message (UEInformationResponse) including ra-ReportList to the cell 1005. The RA-ReportList includes one or a plurality of RA-Reports, and in the present embodiment, the RA-Report may include at least one of the following information 7-1) to 7-3).

7-1) If the purpose of the random access procedure (raPurpose) was to request on-demand SIB1, an indicator for indicating this may be included. For example, a new indicator requestForSIB1 may be set in raPurpose, or at least one of previously defined indicators may indicate that the purpose of the random access procedure (raPurpose) is to request on-demand SIB1. For reference, a description of the previously defined indicators may be as shown in [Table 9] below.

**[Table 9]**

| |
|---|
| ***raPurpose*** |
| This field is used to indicate the RA scenario for which the RA report entry is triggered. The RA accesses associated to Initial access from RRC_IDLE, RRC re-establishment procedure, transition from RRC-INACTIVE. The indicator *beamFailureRecovery* is used in case of successful beam failure recovery related RA procedure in the SpCell [3]. The indicator *reconfigurationWithSync* is used if the UE executes a reconfiguration with sync. The indicator *ulUnSynchronized* is used if the random access procedure is initiated in a SpCell by DL or UL data arrival during RRC_CONNECTED when the timeAlignmentTimer is not running in the PTAG or if the RA procedure is initiated in a serving cell by a PDCCH order [3]. The indicator *schedulingRequestFailure* is used in case of SR failures [3]. The indicator *noPUCCHResourceAvailable* is used when the UE has no valid SR PUCCH resources configured [3]. The indicator *requestForOtherSI* is used for MSG1 based on demand SI request. The indicator *msg3RequestForOtherSI* is used in case of MSG3 based SI request. The indication *IbtFailure* is used when the UE initiates RACH in SpCell due to consistent uplink LBT failures [3]. The field can also be used for the SCG-related RA-Report when the *raPurpose* is set to *beamFailureRecovery, reconfigurationWithSync, ulUnSynchronized, schedulingRequestFailure* and *noPUCCHResourceAvailable.* |

7-2) Information for indicating the SSB(s) used when the UE received SIB1 from the base station (i.e., SSB index(s)) may be included.

7-3) If the UE successfully acquired the On-demand SIB1, an indicator for indicating this may be included. Of course, an indicator separately indicating whether the acquisition of On-demand SIB1 succeeded or failed may also be included.

As an optional embodiment, in the present embodiment, at least one of the information 7-1) to 7-3) may be applied to at least one of an RLF (Radio Link Failure) Report, a CEF (Connection Establishment Failure) Report, a SuccessHO (handover)-Report, and a SuccessPSCell Report defined in the 3GPP specifications.

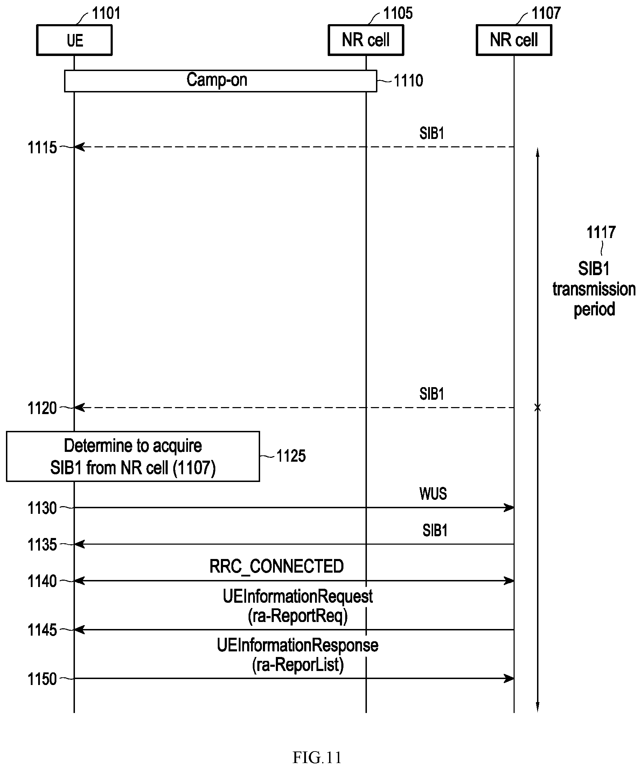

FIG. 11 is a view illustrating a procedure in which a UE performs a random access procedure with a base station to request System Information Block 1 (SIB1) and the UE reports related information to the base station in a wireless communication system according to an embodiment of the disclosure.

A cell according to the disclosure may periodically transmit SIB1. Additionally, a cell according to the disclosure may transmit SIB1 on-demand according to a UE request. A UE according to the disclosure has a feature that, when it is determined that the SIB1 transmission period is long, the random access procedure may be triggered to rapidly acquire SIB1 in an on-demand manner.

Referring to FIG. 11, in step 1110, a UE 1101 may camp-on to an NR cell 1105.

In steps 1115 and 1120, an NR cell 1107 may periodically broadcast SIB1. Specifically, the NR cell 1107 may broadcast SIB1 in steps 1115 and 1120 according to the SIB1 transmission period 1117. In the present embodiment, when the UE 1101 is camping-on to the NR cell 1105, the UE 1101 may not receive the system information 1115, 1120 broadcast by the neighbor cell 1107.

In step 1125, the UE 1101 may determine that acquisition of SIB1 from the NR cell 1107 is necessary due to a predetermined event (e.g., cell selection or cell reselection).

In step 1130, the UE 1101 may transmit WUS to the NR cell 1107 (by triggering the random access procedure) when it is determined that the SIB1 transmission period 1117 of the NR cell 1107 is long or when it is desired to rapidly acquire SIB1.

In step 1135, the UE 1101 may acquire the SIB1 transmitted by the cell 1107 based on the WUS. For example, when the UE 1101 receives an acknowledgement for the SIB1 request from lower layers, the UE 1101 may acquire the requested SIB1 from the cell 1107.

In step 1140, the UE 1101 may establish an RRC connection with the cell 1107 and enter an RRC connected state (RRC_CONNECTED). The UE 1101 may enter the RRC connected state from an RRC idle state (RRC_IDLE) or an RRC inactive state (RRC_INACTIVE) through an RRC connection establishment procedure or an RRC connection resume procedure with the cell 1107.

In step 1145, the cell 1107 may transmit a UE information request message (UEInformationRequest) including ra-ReportReq to the UE 1101 as in the embodiment of FIG. 10.

In step 1150, the UE 1101 may transmit a UE information response message (UEInformationResponse) including ra-ReportList to the cell 1107 as in the embodiment of FIG. 10. The RA-ReportList includes one or a plurality of RA-Reports, and in the present embodiment, the RA-Report may include at least one of the following information 8-1) to 8-5).

8-1) If the purpose of the random access procedure (raPurpose), as in the example of [Table 9] above, was to request on-demand SIB1, an indicator for indicating this may be included. This may follow the above-described embodiment (FIG. 10). Information for indicating the SSB(s) used when receiving SIB1 (i.e., SSB index(s)) may be included.

8-2) If the acquisition of On-demand SIB1 succeeded, an indicator for indicating this may be included. Of course, an indicator separately indicating whether the acquisition of On-demand SIB1 succeeded or failed may also be included.

8-3) An indicator indicating that on-demand SIB1 was requested because the SIB1 transmission period was long may also be included.

8-4) The actual SIB1 transmission period may also be included.

8-5) The actual desired SIB1 transmission period may also be included.

As an optional embodiment, in the present embodiment, at least one of the information 8-1) to 8-5) may be applied to at least one of an RLF Report, a CEF Report, a SuccessHO-Report, and a SuccessPSCell Report defined in the 3GPP specifications.

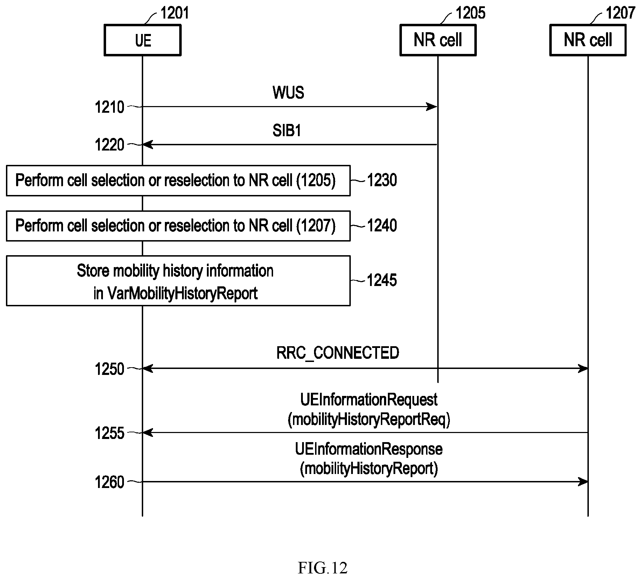

FIG. 12 is a view illustrating a UE operation in which a UE stores mobility history information and reports the mobility history information to a base station in a wireless communication system according to an embodiment of the disclosure.

A UE supporting the storage of mobility history information may store the mobility history information of the UE in a UE variable VarMobilityHistoryReport when a predetermined condition is satisfied. Specifically, a UE according to the disclosure may store the mobility history information in the VarMobilityHistoryReport when at least one of the following conditions 1 to 3 is satisfied.
- Condition 1: Upon change of suitable cell:
   1) When a current PCell (NR or E-UTRA cell) in the RRC connected state is changed to another NR or E-UTRA cell (PCell in RRC_CONNECTED (for NR or E-UTRA) to another NR or E-UTRA cell)
   2) When an NR serving cell in the RRC inactive state (RRC_INACTIVE) is changed to another NR serving cell or E-UTRA cell (serving cell in RRC_INACTIVE (for NR cell) to another NR or E-UTRA cell), or
   3) When an E-UTRA or NR serving cell in the RRC idle state (RRC_IDLE) is changed to another NR or E-UTRA cell (serving cell in RRC_IDLE (for NR or E-UTRA cell) to another NR or E-UTRA cell)
- Condition 2: When the UE enters any cell selection state from camped normally state in the NR or LTE system (entering any cell selection state from camped normally state in NR or LTE)
- Condition 3: When the UE in the RRC connected state in the NR or LTE system enters any cell selection state from a suitable cell (entering any cell selection state from a suitable cell in RRC_CONNECTED in NR or LTE)

Referring to FIG. 12, in step 1210, the UE 1201 may transmit a wake-up signal (WUS) to the NR cell 1205 based on at least one of the above-described embodiments.

In step 1220, the UE 1201 may acquire SIB1 transmitted on-demand by the NR cell 1205. As an optional embodiment, the UE 1201 may acquire SIB1 periodically broadcast by the NR cell 1205 without performing step 1210.

In step 1230, the UE 1201 may select or reselect the NR cell 1205 based on the acquired SIB1.

In step 1240, the UE 1201 may select or reselect another NR cell 1207. For example, although not illustrated, the UE 1201 may acquire SIB1 for the other NR cell 1207 in advance using at least one of the above-described embodiments of FIGS. 6 to 9, and may select or reselect the other NR cell 1207 based on the acquired SIB1 for the other NR cell 1207.

In step 1245, the UE 1201 may store the mobility history information in the VarMobilityHistoryReport according to the following operation 1 proposed in the present embodiment when at least one of the above-described conditions 1 to 3 is satisfied.
- Operation 1: If necessary, the oldest entry value may be removed, and an entry may be included in the VarMobilityHistoryReport variable as follows (include an entry in variable VarMobilityHistoryReport possibly after removing the oldest entry, if necessary, according to the following), the operation 1 may include at least one of the following detailed operations 1) to 3).
   1) If the global cell identity of the previous PCell or serving cell is available, the global cell identity of the previous PCell or serving cell may be stored in the visitedCellId field (if the global cell identity of the previous PCell/ serving cell is available, include the global cell identity of that cell in the field visitedCellId of the entry). Otherwise, the carrier frequency and physical cell identity of the previous PCell or serving cell may be stored in the visitedCellId field (else, include the physical cell identity and carrier frequency of that cell in the field visitedCellId of the entry). That is, the global cell identity or the carrier frequency and physical cell identity for the NR cell 1205 may be stored in the visitedCellId field. And the time spent in the previous PCell or serving cell may be stored in the timeSpent field (set the field timeSpent of the entry as the time spent in the previous PCell/ serving cell)
   2) Information indicating whether SIB1 was received by requesting the NR cell 1205 to broadcast the SIB1 or whether the periodically broadcast SIB1 was received may be stored.
   3) When the SIB1 periodically broadcast from the NR cell 1205 is received, the SIB1 transmission period or the SIB1 transmission period desired by the UE 1201 may be stored.

In step 1250, the UE 1201 may establish an RRC connection with the NR cell 1207 according to cell selection or cell reselection and enter the RRC connected state (RRC_CONNECTED).

In step 1255, the NR cell 1207 may transmit a UE information request message (UEInformationRequest) including mobilityHistoryReportReq to the UE 1201.

In step 1260, the UE 1201 may transmit a UE information response message (UEInformationResponse) including mobilityHistoryReport to the NR cell 1207. Specifically, the UE may perform the above-described operation 1 for the current cell 1207 and transmit a UE information response message including the entry value in the VarMobilityHistoryReport in the mobilityHistoryReport to the NR cell 1207.

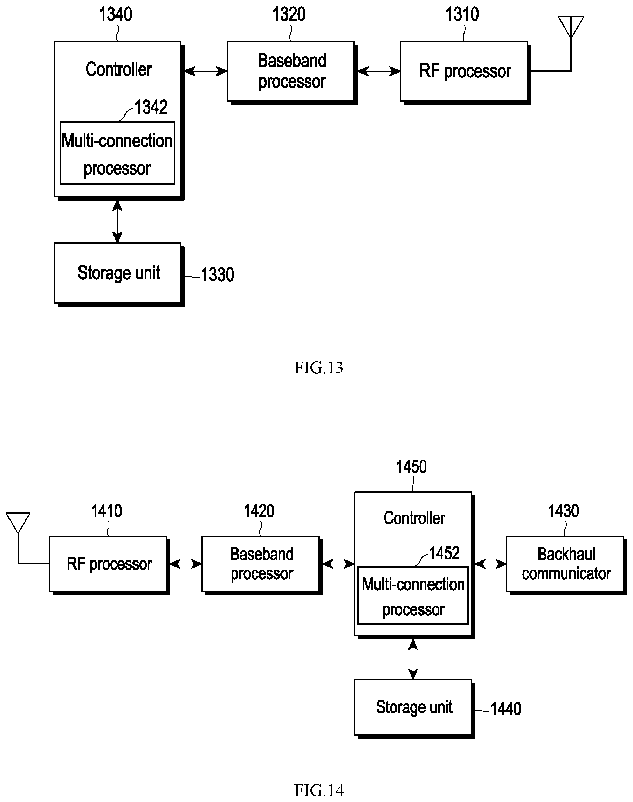

FIG. 13 is a block diagram illustrating an internal structure of a UE according to an embodiment of the disclosure.

Referring to the drawing, the UE may include a Radio Frequency (RF) processor 1310, a baseband processor 1320, a storage unit 1330, and a controller 1340.

The RF processor 1310 performs functions for transmitting/receiving a signal through a wireless channel, such as band conversion and amplification of the signal. That is, the RF processor 1310 up-converts a baseband signal provided from the baseband processor 1320 into an RF band signal and then transmits the RF band signal through an antenna, and down-converts an RF band signal received through the antenna into a baseband signal. For example, the RF processor 1310 may include a transmission filter, a reception filter, an amplifier, a mixer, an oscillator, a digital to analog convertor (DAC), an analog to digital convertor (ADC), and the like. Although only one antenna is illustrated in the drawing, the UE may include a plurality of antennas. Further, the RF processor 1310 may include a plurality of RF chains. Furthermore, the RF processor 1310 may perform beamforming. For the beamforming, the RF processor 1310 may adjust the phase and magnitude of each signal transmitted/received through a plurality of antennas or antenna elements. Further, the RF processor may perform MIMO, and may receive multiple layers when performing a MIMO operation.

The baseband processor 1320 performs a function of conversion between a baseband signal and a bit string according to the physical layer specification of the system. For example, when transmitting data, the baseband processor 1320 generates complex symbols by encoding and modulating a transmission bit string. Further, when receiving data, the baseband processor 1320 reconstructs a reception bit string through demodulation and decoding of the baseband signal provided from the RF processor 1310. For example, according to an orthogonal frequency division multiplexing (OFDM) scheme, when transmitting data, the baseband processor 1320 generates complex symbols by encoding and modulating a transmission bit string, maps the complex symbols to subcarriers, and then configures OFDM symbols through inverse fast Fourier transform (IFFT) operation and cyclic prefix (CP) insertion. Further, when receiving data, the baseband processor 1320 divides the baseband signal provided from the RF processor 1310 into OFDM symbol units, reconstructs signals mapped to subcarriers through fast Fourier transform (FFT), and then reconstructs a reception bit string through demodulation and decoding.

The baseband processor 1320 and the RF processor 1310 transmit and receive signals as described above. Accordingly, the baseband processor 1320 and the RF processor 1310 may be referred to as a transmitter, a receiver, a transceiver, or a communicator. Furthermore, at least one of the baseband processor 1320 and the RF processor 1310 may include a plurality of communication modules to support a plurality of different radio access technologies. Further, at least one of the baseband processor 1320 and the RF processor 1310 may include different communication modules to process signals of different frequency bands. For example, the different radio access technologies may include a wireless LAN (e.g., IEEE 802.11), a cellular network (e.g., LTE), and the like. Further, the different frequency bands may include a super high frequency (SHF) (e.g., 2.NRHz, NRhz) band, and a millimeter wave (e.g., 60GHz) band.

The storage unit 1330 stores data such as a basic program, an application program, and configuration information for the operation of the UE according to at least one of the embodiments of FIGS. 1 to 12. Further, the storage unit 1330 may store information related to a second access node performing wireless communication using a second radio access technology. And the storage unit 1330 provides the stored data according to the request of the controller 1340.

The controller 1340 controls overall operations of the UE according to at least one of the embodiments of FIGS. 1 to 12. For example, the controller 1340 transmits/receives a signal through the baseband processor 1320 and the RF processor 1310. Further, the controller 1340 writes data to and reads data from the storage unit 1340. To this end, the controller 1340 may include at least one processor. For example, the controller 1340 may include a communication processor (CP) that performs control for communication and an application processor (AP) that controls an upper layer such as an application program.

Further, the UE of FIG. 13 may be implemented to include a transceiver capable of transmitting/receiving a radio signal to/from a base station and a processor that controls the operation of the UE according to at least one of the above-described embodiments of FIGS. 1 to 12.

FIG. 14 is a block diagram illustrating a configuration of an NR base station according to an embodiment of the disclosure.

As illustrated in the drawing, the base station may include an RF processor 1410, a baseband processor 1420, a backhaul communicator 1430, a storage unit 1440, and a controller 1450.

The RF processor 1410 performs functions for transmitting/receiving a signal through a wireless channel, such as band conversion and amplification of the signal. That is, the RF processor 1410 up-converts a baseband signal provided from the baseband processor 1420 into an RF band signal and then transmits the RF band signal through an antenna, and down-converts an RF band signal received through the antenna into a baseband signal. For example, the RF processor 1410 may include a transmission filter, a reception filter, an amplifier, a mixer, an oscillator, a DAC, an ADC, and the like. Although only one antenna is illustrated in the drawing, the first access node may include a plurality of antennas. Further, the RF processor 1410 may include a plurality of RF chains. Furthermore, the RF processor 1410 may perform beamforming. For the beamforming, the RF processor 1410 may adjust the phase and magnitude of each signal transmitted/received through a plurality of antennas or antenna elements. The RF processor may perform a downlink MIMO operation by transmitting one or more layers.

The baseband processor 1420 performs a function of conversion between a baseband signal and a bit string according to the physical layer specification of a first radio access technology. For example, when transmitting data, the baseband processor 1420 generates complex symbols by encoding and modulating a transmission bit string. Further, when receiving data, the baseband processor 1420 reconstructs a reception bit string through demodulation and decoding of the baseband signal provided from the RF processor 1410. For example, according to an OFDM scheme, when transmitting data, the baseband processor 1420 generates complex symbols by encoding and modulating a transmission bit string, maps the complex symbols to subcarriers, and then configures OFDM symbols through IFFT operation and CP insertion. Further, when receiving data, the baseband processor 1420 divides the baseband signal provided from the RF processor 1410 into OFDM symbol units, reconstructs signals mapped to subcarriers through FFT operation, and then reconstructs a reception bit string through demodulation and decoding. The baseband processor 1420 and the RF processor 1410 transmit and receive signals as described above. Accordingly, the baseband processor 1420 and the RF processor 1410 may be referred to as a transmitter, a receiver, a transceiver, a communicator, or a wireless communicator.

The backhaul communicator 1430 provides an interface for performing communication with other nodes in the network. That is, the backhaul communicator 1430 converts a bit string transmitted from the main base station to another node, e.g., an auxiliary base station, a core network, and the like, into a physical signal, and converts a physical signal received from the other node into a bit string.

The storage unit 1440 stores data such as a basic program, an application program, and configuration information for the operation of the base station according to at least one of the embodiments of FIGS. 1 to 12. Further, the storage unit 1440 may store information about a bearer allocated to an accessed UE, a measurement result reported from the accessed UE, and the like. Further, the storage unit 1440 may store information that serves as a determination criterion for whether to provide or stop multiple connections to the UE. And the storage unit 1440 provides the stored data according to the request of the controller 1450.

The controller 1450 controls overall operations of the base station according to at least one of the embodiments of FIGS. 1 to 12. For example, the controller 1450 transmits/receives a signal through the baseband processor 1420 and the RF processor 1410 or through the backhaul communicator 1430. Further, the controller 1450 writes data to and reads data from the storage unit 1440. To this end, the controller 1450 may include at least one processor.

Further, the base station of FIG. 14 may be implemented to include a transceiver capable of transmitting/receiving a radio signal to/from a UE and a processor that controls the operation of the base station according to at least one of the above-described embodiments of FIGS. 1 to 12.

## Claims

1. A method for receiving system information by a user equipment (UE) in a wireless communication system, the method comprising:
transmitting, by the UE in a radio resource control (RRC) connected state with a first base station of a first cell, UE capability information for reception of the system information to the first base station; and
receiving, by the UE, based on the UE capability information, an RRC connection release message including configuration information for cell selection or cell reselection of the UE from the first base station,
wherein the configuration information includes at least one of:
at least a part of the system information for a second cell which is a candidate target cell for the cell selection or the cell reselection, and
information for the reception of the system information.

2. The method of claim 1,
wherein the system information includes system information block 1 (SIB1) of the second cell, and
wherein the UE capability information includes at least one of:
capability information capable of transmitting a wake-up signal (WUS) for requesting on-demand provision of the SIB1 to a second base station of the second cell that transmits the SIB1,
capability information capable of receiving SIB1 per cell or per cell list through the RRC connection release message, and
capability information capable of receiving a part of SIB1 per cell or per cell list through the RRC connection release message.

3. The method of claim 1,
wherein the system information includes SIB1 of the second cell, and
wherein the configuration information includes at least one of SIB1 per cell, SIB1 per cell list, SIB1 per frequency, and measurement-related parameters for the candidate target cell.

4. The method of claim 1, further comprising:
transitioning, by the UE that has received the RRC connection release message, from the RRC connected state to an RRC idle state or an RRC inactive state; and
performing a cell selection or cell reselection procedure for the second cell, based on the configuration information included in the RRC connection release message.

5. The method of claim 1,
wherein the RRC connection release message further includes timer information indicating an applicable period of the configuration information.

6. A UE in a wireless communication system, the UE comprising:
a transceiver; and
a processor configured to, in a radio resource control (RRC) connected state with a first base station of a first cell, transmit, through the transceiver, UE capability information for the reception of system information to the first base station, and
receive, based on the UE capability information, an RRC connection release message including configuration information for the cell selection or the cell reselection of the UE from the first base station through the transceiver,
wherein the configuration information includes at least one of:
at least a part of the system information for a second cell which is a candidate target cell for the cell selection or the cell reselection, and
information for the reception of the system information.

7. The UE of claim 6,
wherein the system information includes system information block 1 (SIB1) of the second cell, and
wherein the UE capability information includes at least one of:
capability information capable of transmitting a wake-up signal (WUS) for requesting on-demand provision of the SIB 1 to a second base station of the second cell that transmits the SIB 1,
capability information capable of receiving SIB 1 per cell or per cell list through the RRC connection release message, and
capability information capable of receiving a part of SIB 1 per cell or per cell list through the RRC connection release message.

8. The UE of claim 6,
wherein the system information includes SIB 1 of the second cell, and
wherein the configuration information includes at least one of SIB1 per cell, SIB1 per cell list, SIB 1 per frequency, and measurement-related parameters for the candidate target cell.

9. The UE of claim 6, wherein the processor is further configured to:
transition, by the UE that has received the RRC connection release message, from the RRC connected state to an RRC idle state or an RRC inactive state, and
control performing a cell selection or cell reselection procedure for the second cell based on the configuration information included in the RRC connection release message.

10. The UE of claim 6,
wherein the RRC connection release message further includes timer information indicating an applicable period of the configuration information.

11. A base station in a wireless communication system, the base station comprising:
a transceiver; and
a processor configured to receive, through the transceiver, UE capability information related to the transmission of system information from a UE in a radio resource control (RRC) connected state with the base station of a first cell, and
transmit, based on the UE capability information, an RRC connection release message including configuration information for cell selection or cell reselection of the UE to the UE through the transceiver,
wherein the configuration information includes at least one of:
at least a part of the system information for a second cell which is a candidate target cell for the cell selection or the cell reselection, and
information for the transmission of the system information.

12. The base station of claim 11,
wherein the system information includes system information block 1 (SIB1) of the second cell, and
wherein the UE capability information includes at least one of:
capability information capable of transmitting a wake-up signal (WUS) for requesting on-demand provision of the SIB1 to another base station of the second cell that transmits the SIB1,
capability information capable of receiving SIB1 per cell or per cell list through the RRC connection release message, and
capability information capable of receiving a part of SIB1 per cell or per cell list through the RRC connection release message.

13. The base station of claim 11,
wherein the system information includes SIB1 of the second cell, and
wherein the configuration information includes at least one of SIB1 per cell, SIB1 per cell list, SIB1 per frequency, and measurement-related parameters for the candidate target cell.

14. The base station of claim 11,
wherein the RRC connection release message further includes timer information indicating an applicable period of the configuration information.

15. The base station of claim 11,
wherein the processor is further configured to transmit, through the transceiver, system information including cell reselection information used in the evaluation procedure of the cell reselection at the UE.
